# EUROPÄISCHE PATENTSCHRIFT

(11) **EP 3 475 200 B1**
(45) Veröffentlichungstag und Bekanntmachung des Hinweises auf die Patenterteilung: **14.10.2020**
(21) Anmeldenummer: 17709598.1
(22) Anmeldetag: 21.02.2017
(51) Int. Cl.: B65G 47/08

(54) **VERFAHREN UND VORRICHTUNG ZUM UMGANG MIT HINTEREINANDER BEWEGTEN STUECKGUETERN**
METHOD AND DEVICE FOR HANDLING PIECE GOODS MOVED ONE AFTER THE OTHER
PROCÉDÉ ET DISPOSITIF DE MANUTENTION DE CHARGES ISOLÉES DÉPLACÉES LES UNES DERRIÈRE LES AUTRES

(30) Priorität: 23.06.2016 DE 102016111559
(43) Veröffentlichungstag der Anmeldung: 01.05.2019
(73) Patentinhaber: KRONES Aktiengesellschaft, 93073 Neutraubling (DE)
(72) Erfinder: KIRZINGER, Johannes, 93073 Neutraubling (DE); KOLLMUSS, Manuel, 93073 Neutraubling (DE)
(74) Vertreter: Benninger, Johannes
(86) Internationale Anmeldenummer: PCT/EP2017/053878
(87) Internationale Veröffentlichungsnummer: WO 2017/220216

(56) Entgegenhaltungen:
- EP-A1- 2 662 293
- EP-A2- 2 246 277
- WO-A1-2010/106529
- WO-A1-2017/182217
- DE-A1- 10 219 129
- DE-A1-102006 011 585
- DE-B- 1 228 557
- US-A1- 2012 039 699

## Beschreibung

Die vorliegende Erfindung betrifft ein Verfahren zum Umgang mit hintereinander bewegten Stückgütern mit den Merkmalen des unabhängigen Verfahrensanspruchs 1. Zudem betrifft die Erfindung eine Vorrichtung zum Umgang mit hintereinander bewegten Stückgütern mit den Merkmalen des unabhängigen Vorrichtungsanspruchs 14.

Bei bekannten Verfahren zur Verpackung und/oder Palettierung von Stückgütern wie Paketen, Gebinden o. dgl. werden diese zunächst auf in Linien fördernden Transporteinrichtungen befördert und in geeigneter Weise verschoben, ausgerichtet und/oder zusammengestellt, um gewünschte Lagenbilder zu erzeugen, die anschließend mehrfach übereinander gestapelt werden können, bspw. auf hierfür vorbereitete Paletten. Diese Behandlungsschritte können insbesondere bei Anlagen zur Behandlung von Behältern für Getränke sinnvoll eingesetzt werden. Bei den fraglichen Stückgütern kann es sich bspw. um Pakete, um Kästen, Kartons, Gebinde oder sonstige Cluster handeln. Damit die erwähnten Paletten transportsicher sind, müssen die zusammengestellten Lagenbilder, die auch als zusammengestellte Takte bezeichnet werden, bestimmte Anforderungen erfüllen. Herkömmlicherweise sind zur Ausbildung solcher Takte vorbereitende Maßnahmen notwendig, die etwa darin bestehen, die zunächst regelmäßig oder schrittweise auf einem sog. Zuteilungsband beförderten Stückgüter auf einem zwischengeschalteten Transportband zu gruppieren bzw. zu sammeln, um sie von dort gesammelt und/oder gruppiert an ein Lagenbildungsband oder einen Lagenbildungstisch zu übergeben.

Aus dem Stand der Technik ist es bekannt, Stückgüter vereinzelt von einem Zuteilband auf ein Transportband zu übergeben, womit gemeint ist, dass auf dem Zuteilband jeweils einzelne Stückgüter an das Transportband übergeben werden. Diese Übergabe kann dadurch erfolgen, dass jedes einzelne Stückgut durch einen Geschwindigkeitsunterschied zwischen Zuteilband und Transportband einzeln auf das Transportband übergeben wird, wobei eine Steuerung mithilfe optischer Sensoren wie etwa Lichtschranken vorhanden sein kann. Ebenso denkbar ist es, die Stückgüter vereinzelt von dem Transportband durch schrittweises Fördern des Lagenbildungsbandes zu übergeben. Um auf solche Weise jeweils einzelne Stückgüter vom Transportband auf das Lagenbildungsband zu übergeben, kann das Lagenbildungsband in synchronisierten Schritten mit dem Transportband genau um eine Länge eines Stückgutes in Transportrichtung verfahren werden. Auf dem Transportband können diese Takte oder Gruppierungen bzw. Teile der gruppierten Stückgüter je nach gewünschter Lagenbildung auch gedreht werden, um dann an das Lagenbildungsband übergeben zu werden.

Für die Ausgestaltung von Gruppiertischen, die dem Zusammenführen von Stückgütern wie z.B. Kartons, Schrumpfpacks, Trays oder Kunststoffkisten dienen, kennt der Stand der Technik unterschiedliche Ausführungsvarianten. So können etwa Stückgüter zusammengeführt werden, indem sie in eine zweidimensionale Formation (Blockbildung, z.B. Palettenschicht) gebracht werden. Hierzu kann bspw. eine Rollenbahn aus einer Gasse oder aus mehreren Gassen linear versorgt werden. Die Stückgüter können je nach Bedarf vor oder auf dem Rollenförderer gedreht und auf dem Rollenförderer mechanisch durch Stoppstellen in der jeweils erforderlichen Position angeordnet werden. Die solchermaßen positionierten Stückgüter können anschließend orthogonal zur Transportrichtung vom Rollenförderer abgeschoben werden. Der Zulauf, die Anordnung und das Abschieben der Stückgüter können hierbei als ein Zyklus betrachtet werden. Zur Zusammenstellung einer Schicht wird mindestens ein solcher Zyklus benötigt; normalerweise jedoch sind mehrere solcher Zyklen notwendig, um eine Schicht zu bilden. Die teilweise diskontinuierliche Förderung mit ihren relativ abrupten Geschwindigkeits- bzw. Richtungsänderungen führt zu entsprechend hohen mechanischen Belastungen, die auf die Stückgüter wirken, was einer produktschonenden Verarbeitung der Stückgüter abträglich sein kann.

Das Dokument EP 1 465 101 A2 offenbart eine Vorrichtung zur Reihenbildung von Packgütern für Gebindepalletierer. Der Gebindepalletierer umfasst mindestens eine Lagenbildungsstation und mindestens eine Palletierstation. Die Reihenbildungsvorrichtung umfasst mindestens eine Positionierstation, auf der die Packgüter während des Transports in mindestens einer Reihe mit gewünschten Abständen angeordnet werden. Die Positionierstation ist an einen der Lagenbildungsstation zugeordneten Bereitstellungsförderer angeschlossen. Stromaufwärts der Positionierstation ist mindestens ein Stauförderer angeordnet, wobei die Positionierstation mehrere in Transportrichtung hintereinander angeordnete Förderabschnitte mit steuer- und regelbaren Antrieben besitzt. Mit den steuer- und regelbaren Antrieben ist es möglich, eine gewünschte Abstandsbildung der Packgüter zu erzielen. Die Reihenbildungsvorrichtung besitzt mindestens eine Überwachungseinrichtung zur Ermittlung und Überwachung der Abstandsbildung der Packgüter. Der Aufbau dieser bekannten Reihenbildungsvorrichtung ist relativ aufwendig und kompliziert, zumal er eine Vielzahl von Bändern erfordert, die für eine Abstandsbildung und/oder Drehung der Packgüter benötigt werden.

Aus der US 5 123 231 A ist eine Vorrichtung zur Zusammenstellung von Artikeln zu Gruppen und zu deren anschließenden Verpackung bekannt. Auf einem Zuführband werden die Artikel jeweils unter einem vordefinierten Abstand einem Sammelband zugeführt, auf dem die Gruppen aus einer immer gleichen Anzahl von Artikeln zusammengestellt werden. Die Gruppen werden mit einem nachfolgenden Band einer Verpackungseinrichtung zugeführt.

Die EP 1 927 559 A1 offenbart einen Gruppiertisch zum Zusammenführen von Gebinden, insbesondere von Schrumpfpacks, zur Schichtenbildung, umfassend einen kontinuierlich antreibbaren Förderer, einen dem Förderer nachgeordneten und taktweise antreibbaren Schrittförderer, einen seitlich neben dem Schrittförderer angeordneten Schichtenbildungsplatz und eine dem Schrittförderer zugeordnete rechtwinklig zur Förderrichtung wirksame Abschiebeeinrichtung zum gruppenweisen Überführen der Gebinde auf den Schichtenbildungsplatz.

Die US 2005/0246056 A1 offenbart ein System zum Anordnen von Packstücken in einer Lage, die im weiteren Verlauf der Handhabung auf einer Palette abgelegt bzw. gestapelt werden. Dabei sind drei Förderbänder linear angeordnet. Über ein erstes Förderband werden die Packstücke der Vorrichtung zur Verfügung gestellt. Die Packstücke sind auf dem ersten Förderband linear angeordnet. Mit einem zweiten Förderband werden die Packstücke vereinzelt. Anschließend gelangen die Packstücke zu einem dritten Förderband, bei dem die Anordnung der Packstücke durchgeführt wird. Alle drei Förderbänder laufen mit unterschiedlichen, doch jeweils konstanten Geschwindigkeiten. Nachdem eine Lage fertig zusammengestellt ist, wird die Lage auf die Palette übergeführt.

Der anhand von unterschiedlichen Dokumenten veranschaulichte bekannte Stand der Technik kann in der Praxis mehrere Nachteile mit sich bringen. Beim Lückenziehen oder Übergeben der Stückgüter zwischen Zuteilband, Transportband und ggf. auch Lagenbildungsband entsteht das Risiko, durch die jeweiligen Geschwindigkeitsunterschiede und hohen Beschleunigungs- und/oder entsprechend steilen Verzögerungsrampen die Stückgüter nicht in der anzustrebenden exakten Weise übergeben zu können. Einzelne Stückgüter können sich sogar von ihren vorgegebenen Positionen ab- oder wegdrehen. Eine nicht zu vernachlässigende Rolle kommt zudem dem Reibwiderstand zwischen dem jeweiligen Förder- oder Transportband und der Unterseite des jeweiligen Stückgutes zu, was dazu führen kann, dass die Lücken zwischen den Takten nicht exakt reproduzierbar sind, sondern unterschiedlich ausfallen können. Zusätzlich kann ein Leistungsverlust entstehen, der sich durch den zurückzulegenden Weg der einzelnen Lücken beim sog. Eintakten vom Zuteilband auf das Transportband ergibt. Alle diese Effekte erhöhen die Zeitdauer, die für die Erstellung einer Palette benötigt wird.

Um diese Nachteile zu vermeiden, werden in der EP 2 107 018 A1 ein Verfahren und eine Vorrichtung vorgeschlagen, mit denen eine sichere, schnelle und qualitativ hochwertige Bereitstellung von Takten aus Gebinden und/oder Gebindegruppen möglich sein soll, um solchermaßen die Reihen für die Lagen einer Palette auf effektive Weise erstellen zu können. Die vorgeschlagene Vorrichtung dient dem Zusammenstellen und Ausrichten von Gebindegruppen, wobei die Vorrichtung ein Zuteilband, ein Transportband und ein Reihen- oder Lagenbildungsband umfasst. Das Zuteilband, das Transportband und das Reihen- oder Lagenbildungsband ist zum Antrieb mit jeweils einem eigenen Motor versehen. Mittels einer Steuerung wird die Geschwindigkeit des Zuteilbandes reguliert, damit die auf dem Zuteilband Stoß an Stoß transportierten Gebinde bzw. Gebindegruppen auf dem Transportband in mehrere Takte aus Gebinden bzw. Gebindegruppen aufgeteilt werden können. Zwischen den einzelnen Takten werden vordefinierte Lücken gebildet. Dem Reihen- oder Lagenbildungsband kann ein Roboter zugeordnet sein, der die vom Transportband einlaufenden Takte zur Lagenbildung in Transportrichtung oder quer zur Transportrichtung verschieben und/oder drehen kann. Zudem soll das Lagenbildungsband die Erzeugung einer aus mehreren Reihen gebildeten Lage ermöglichen.

Aus der DE 10 2011 080 812 A1 ist weiterhin ein Verfahren zur Bildung von palettierfähigen Lagen aus nebeneinander stehenden Stückgütern auf einem Lagenbildungsplatz bekannt. Dem Lagenbildungsplatz ist ein programmgesteuerter Manipulator zum Abholen und/oder Überführen einzelner oder mehrerer Stückgüter an wenigstens zwei räumlich voneinander entfernten und/oder räumlich versetzten Zuführstationen und zum Positionieren durch Drehen und/oder Verschieben der Stückgüter in vorgebbare Freigabepositionen auf dem Lagenbildungsplatz zugeordnet.

Solche Manipulatoren bzw. den Lagenbildungsbändern zugeordnete Roboter können bspw. als Mehrachsroboter ausgebildet sein, wie sie bspw. aus der DE 10 2009 026 220 A1 im Zusammenhang mit der Gruppierung von Artikeln bzw. von Getränkebehältern bekannt sind. Eine häufig eingesetzte Variante von derartigen Manipulatoren sind sog. Portalroboter, die oftmals in modularer Bauweise in Verpackungsstraßen, in Gruppiereinheiten oder in Palettierstationen eingesetzt werden. Als Transportmittel bzw. Förderelement wird häufig ein horizontal in Längsrichtung der Förderebene verlaufendes Förderband oder ein anderes endlos umlaufendes Medium verwendet, auf dem die Gegenstände und/oder die Verpackungen in vorbestimmten Positionen oder auch in zufällig eingenommenen Positionen angeordnet sind. Ein derartiges Modul ist bspw. aus der DE 10 2009 043 970 A1 bekannt. Die in solchen Modulen typischerweise eingesetzten Portalroboter können bspw. mit Greifvorrichtungen zum seitlichen Erfassen der zu handhabenden und zu manipulierenden Stückgüter ausgestattet sein, wie sie etwa aus der DE 10 2010 020 847 A1 bekannt sind.

Hauptziel aller bekannten Handhabungssysteme ist es, eine präzise Positionierung von Stückgütern, Paketen, Gebinden und/oder Artikeln für eine möglichst störungsfreie und zuverlässige Lagenbildungs-, Palettierungs- und/oder Verpackungsvorbereitung zu ermöglichen. Ein Nebenziel, das jedoch zunehmend wichtiger wird, besteht darin, hierbei die Taktzeiten zu reduzieren, ohne den bereits erreichten Grad an Präzision zu reduzieren oder Einbußen hinsichtlich der bereits erreichten Zuverlässigkeit in Kauf nehmen zu müssen. Darüber hinaus besteht ein weiteres Ziel der vorliegenden Erfindung darin, die Auslenkungen und Bewegungsfahrten der jeweils zur Lagenbildung verwendeten Handhabungssysteme zu reduzieren, was bei den normalerweise mit hohen Geschwindigkeiten und entsprechend kurzen Stellzeiten arbeitenden Handhabungssystemen bzw. Handhabungsrobotern zu reduzierten mechanischen und Bauteilbelastungen beitragen kann. DE1228557 beschreibt ein Verfahren nach dem Oberbegriff des Anspruchs 1.

Das Verfahren soll die Verarbeitung von Stückgütern ermöglichen, die in mindestens einer Reihe befördert bzw. transportiert werden. Zudem soll das Verfahren mit höherer Geschwindigkeit ablaufen können als dies bisher möglich war, ohne dass damit Nachteile hinsichtlich der Positionierungspräzision und/oder der Zuverlässigkeit der Manipulation der Stückgüter in Kauf zu nehmen sind. Die entsprechende Vorrichtung soll schneller betreibbar sein als die aus dem Stand der Technik bekannten Manipulationsvorrichtungen, und dies bei zumindest annähernd gleicher Zuverlässigkeit und annähernd gleicher Stellpräzision.

Diese Ziele der Erfindung werden mit den Gegenständen der unabhängigen Ansprüche, d.h. mit einem Verfahren und einer Vorrichtung zum Umgang mit in mindestens einer Reihe hintereinander bewegten Stückgütern erreicht, welche die Merkmale der unabhängigen Patentansprüche 1 und 14 umfassen. Merkmale vorteilhafter Weiterbildungen der Erfindung ergeben sich aus den jeweiligen abhängigen Ansprüchen.

Die Erfindung bezieht sich auf ein Verfahren und eine Vorrichtung oder Handhabungsvorrichtung zum Umgang mit hintereinander bewegten Stückgütern die zu einem Erfassungsbereich wenigstens eines Manipulators transportiert werden. Es sei an dieser Stelle vorsorglich darauf hingewiesen, dass im Zusammenhang der vorliegenden Beschreibung teilweise lediglich von einem Verfahren, einer Verfahrensvariante, dem erfindungsgemäßen Verfahren o. dgl. die Rede ist. In diesen Fällen ist damit generell das genannte Verfahren zum Umgang mit hintereinander bewegten Stückgütern gemeint. Wenn zudem im Zusammenhang der vorliegenden Beschreibung teilweise lediglich bzw. verkürzend von einer Vorrichtung, einer Handhabungsvorrichtung, einer Vorrichtungsvariante, der erfindungsgemäßen Vorrichtung o. dgl. die Rede ist, so ist damit generell die weiter unten im Detail beschriebene Vorrichtung zum Umgang mit hintereinander bewegten Stückgütern gemeint. Wenn hier, in den Ausführungsbeispielen, in den Ansprüchen und/oder im Zusammenhang mit der gesamten Beschreibungsoffenbarung von einem Umgang mit Stückgütern die Rede ist, so umfasst dies die Handhabung, die Erfassung, die Positionierung, die Bewegung im Raum, die Drehung, Ausrichtung etc., insbesondere im Zusammenhang mit einem Manipulator und/oder beweglichen Teilen des Manipulators, der/die in einem Erfassungsraum bzw. Erfassungsbereich angeordnet ist/sind und sich dort innerhalb von definierbaren Grenzen bewegen kann bzw. können. Allerdings umfasst der Begriff des Umgangs gleichermaßen Positionierungs-, Förder- und/oder alle Arten von Handhabungsschritten, die im Zusammenhang mit Fördereinrichtungen, Horizontalfördereinrichtungen, Transportbändern etc. stattfinden können, die Teil der erfindungsgemäßen Vorrichtung sind und/oder mit dieser in Wirkverbindung und/oder in einer Transportverbindung stehen, seien dies in Transport- und/oder Förderrichtung nachgeordnete, vorgeordnete oder integrierte Teile der erfindungsgemäßen Vorrichtung.

Wenn von einer unveränderten oder neuen Ausrichtung der erfassten Artikel oder Stückgüter die Rede ist, so ist damit im Zusammenhang mit der vorliegend beschriebenen Vorrichtung insbesondere die winkelige Ausrichtung der zuvor erfassten und vom Manipulator bewegten und/oder verschobenen und/oder gedrehten Stückgüter die Rede. Mit Erfassen ist im vorliegenden Zusammenhang meist das körperliche, formschlüssige und/oder kraftschlüssige und/oder klemmende Greifen eines Stückgutes oder gleichzeitig mehrerer Stückgüter sowie deren bzw. dessen Handhabung bis zur Erreichung der Zielposition und/oder Zielausrichtung gemeint.

Wenn im Zusammenhang der vorliegenden Erfindung von einer klemmenden Erfassung von Stückgütern die Rede ist, so umfasst dies ebenso eine kraftschlüssige und/oder reibschlüssige Erfassung, ein kraftschlüssiges und/oder reibschlüssiges Greifen bzw. Aufnehmen von Stückgütern. Alle diese Varianten des Aufnehmens, Erfassens und/oder Greifens von Stückgütern können gleichermaßen mit einem formschlüssigen Erfassen, Greifen bzw. Aufnehmen der Stückgüter kombiniert sein. Wenn im Zusammenhang der vorliegenden Erfindung von einer Zielposition und/oder Zielausrichtung die Rede ist, so kann dies insbesondere bedeuten, dass die Stückgüter erfasst, verschoben und/oder gedreht werden können, wobei die Stückgüter wahlweise auch nur verschoben (ohne Drehung) bzw. nur gedreht (ohne Verschiebebewegung) werden können.

Bei den Stückgütern kann es sich um in einer Reihe hintereinander bewegte Artikel, Packstücke, Behälterzusammenstellungen, Gebinde, Kartons o.ä. handeln. Beispielsweise kann vorgesehen sein, dass eine Mehrzahl von gleichen oder unterschiedlichen Artikeln durch eine Kartonumverpackung, durch eine Umreifung oder mehrere Umreifungen, durch eine Folienverpackung o. dgl. zu einem Gebinde bzw. Mischgebinde zusammengefasst sind. Weiterhin kann eine Mehrzahl von Getränkebehältern, die beispielsweise durch eine Schrumpfverpackung, durch ein Umreifungsband oder mehrere Umreifungsbänder zusammengehalten werden, jeweils ein Stückgut bilden. Die hintereinander bewegten Stückgüter können dabei je nach Anforderung von nachfolgenden Handhabungsvorrichtungen gleich oder unterschiedlich ausgebildet sein.

Vorzugsweise ist vorgesehen, dass zu dem Zeitpunkt des Erfassens mindestens eines Stückgutes zwischen diesem und den direkt nachfolgenden Stückgütern kein Staudruck oder allenfalls ein sehr geringer Staudruck besteht bzw. herrscht. Sollte sich beim Heranführen der Stückgüter dennoch ein Staudruck aufgebaut haben, so ist dieser vorzugsweise vor dem Erfassen mindestens eines Stückgutes durch den Manipulator durch geeignete Mittel abzubauen; beispielsweise kann dies durch Auswahl einer geeigneten Oberfläche der Transporteinrichtung für die hintereinander bewegten Stückgüter erreicht werden. Insbesondere kann vorgesehen sein, dass die Oberfläche der Transporteinrichtung gummiert ist, um ein Verrutschen der Stückgüter auf der Transporteinrichtung zu verhindern bzw. um den Staudruck der ständig nachgeförderten Stückgüter abzubauen bzw. zumindest signifikant zu reduzieren.

Bei dem Erfassen des mindestens einen Stückgutes durch den Manipulator wird das mindestens eine Stückgut in seiner Bewegung in seiner Transportrichtung und in Transportrichtung der nachfolgenden Stückgüter normalerweise nicht abgebremst. Stattdessen erhält das mindestens eine Stückgut nach dem Erfassen durch den Manipulator der Vorrichtung mindestens eine zusätzliche Geschwindigkeits- und/oder Richtungskomponente, wobei die Geschwindigkeitskomponente nicht negativ gegenüber der Geschwindigkeit der Stückgüter der weiterhin einlaufenden, hintereinander bewegten Stückgüter sein darf und die Richtungskomponente nicht entgegen der Transportrichtung der Stückgüter der weiterhin einlaufenden, hintereinander bewegten Stückgüter gerichtet sein darf. Ansonsten bestünde eine Kollisionsgefahr zwischen dem erfassten Stückgut und dem nachfolgenden, nunmehr zuvorderst befindlichen Stückgut der weiterhin einlaufenden, hintereinander bewegten Stückgüter.

Im Erfassungsbereich des Manipulators wird das wenigstens eine zu transportierende Stückgut normalerweise mittels geeigneter Klemm- und/oder Greifmittel des wenigstens einen Manipulators erfasst, von nachfolgenden Stückgütern räumlich abgetrennt und mittels einer Rotationsbewegung des Manipulators in eine definierte relative Zielposition und Zielausrichtung gegenüber den jeweils nachfolgenden Stückgütern gebracht. Insbesondere handelt es sich hierbei um eine seitliche Rotation, bei der die Rotationsbewegung zusätzlich mit einer seitlichen Bewegung gekoppelt ist.

Dabei ist vorgesehen, dass wenigstens eine, von den mindestens zwei Klemm-und/oder Greifmittel des wenigstens einen Manipulators erfasste Stückgut definierte erste vertikale und in etwa senkrecht zu einer Transportrichtung der Stückgüter und/oder einer Längserstreckungsrichtung der einlaufenden Stückgüter orientierte Symmetrieebene beabstandet ist von einer hierzu in etwa parallel ausgerichteten zweiten vertikalen Symmetrieebene, die durch den Manipulator bzw. durch dessen Klemm- und/oder Greifmittel definiert ist. Damit kann insbesondere definiert sein, dass das wenigstens eine vom Manipulator erfasste Stückgut dort nicht mittig bzw. symmetrisch zu einer vertikalen Mittel- und/oder Drehachse des Manipulators bzw. dessen Klemm- und/oder Greifmittel erfasst und positioniert ist, während es unter Rotation in die gewünschte Zielposition und Zielausrichtung gebracht wird. Dies gilt gleichermaßen für zwei oder mehr erfasste Stückgüter, die in Zusammenschau ebenfalls außermittig bzw. unsymmetrisch im Manipulator geklemmt sein können.

Dieses beschriebene Auftreten einer Distanz zwischen den beschriebenen vertikalen Symmetrieebenen kann auch als asynchrones Abgreifen bzw. als asynchrones Erfassen bzw. generell als asynchrone Verarbeitung der zu erfassenden und/oder zu positionierenden und/oder auszurichtenden Stückgüter bezeichnet werden, und zwar insbesondere deshalb, weil hierbei keine vollständige Beladung des Manipulators bzw. keine vollständige Beladung bzw. Beanspruchung des zwischen den Greiferbacken oder innerhalb des Greiferkopfes maximal zur Verfügung stehenden Raumes für aufzunehmende und/oder zu greifende Stückgüter erfolgt, sondern nur eine Teilbeladung, Teilerfassung und/oder teilweise Beanspruchung der Beladungs- und/oder Aufnahmekapazität des Manipulators bzw. seiner Klemm- und/oder Greifelemente.

Dennoch sei darauf hingewiesen, dass grundsätzlich eine solche Teilbeladung und/oder Teilbeanspruchung des im Manipulator zur Verfügung stehenden Raumes oder Platzes für zu erfassende Stückgüter nicht zwingend mit einer Distanzierung zwischen den Symmetrieebenen durch die insgesamt je Erfassungsvorgang aufgenommenen Stückgüter und durch den Manipulator bzw. dessen Klemm- und/oder Greifmittel einhergehen muss, sondern dass die erfassten Stückgüter auch jeweils mittig im Manipulator bzw. mittig zwischen dessen Klemm- und/oder Greifmittel positioniert sein können, so dass an beiden Schmalseiten eines Stückgutes oder den nach außen weisenden Schmalseiten einer Gruppe von zwei oder drei Stückgütern ein verbleibender, ggf. ungenutzter Raum verbleiben kann, der nicht mit Stückgütern besetzt ist.

Unter Umständen kann innerhalb des Verfahrens, d.h. zwischen zwei oder mehr Verfahrensschritten, immer auch wieder eine Variante auftreten bzw. sinnvoll sein, bei der diese erwähnten Symmetrieebenen zusammenfallen oder nahezu zusammenfallen, womit eine synchrone Beladung des Manipulators verbunden ist.

Insbesondere ist bei dem erfindungsgemäßen Verfahren vorgesehen, dass in mindestens einem Schritt von mehreren zeitlich aufeinanderfolgenden Manipulationsschritten jeweils wenigstens ein transportiertes Stückgut erfasst und durch eine Rotation des Manipulators bzw. seiner Klemm- und/oder Greifmittel um eine vertikale Achse mit einem Rotationswinkel von etwa 270°, insbesondere jedoch von genau 270°, von seiner geradlinigen Bewegungsbahn in ursprünglicher Transportrichtung jeweils räumlich abgetrennt und in eine jeweilige definierte relative Zielposition und Zielausrichtung gegenüber den nachfolgenden Stückgütern gebracht wird. Gemäß einer Ausführungsform der Erfindung erfolgt zeitgleich mit der 270° Drehung eine Beschleunigung der erfassten Stückgüter, d.h. die Rotationsbewegung wird von einer zusätzlichen Geschwindigkeitskomponente in Transportrichtung überlagert. Gemäß einer alternativen Ausführungsform erfolgt zeitgleich mit der 270° Drehung zumindest zeitweise eine Aufsynchronisierung der erfassten Stückgüter mit der Transportgeschwindigkeit der nachfolgenden Stückgüter oder mit der Geschwindigkeit der Transporteinrichtung. Insbesondere kann hierbei die Geschwindigkeit der erfassten Stückgüter annähernd der Transportgeschwindigkeit der nachfolgenden Stückgüter oder der Geschwindigkeit der Transporteinrichtung entsprechen.

Daraus resultierend wird aus den in zeitlich aufeinanderfolgenden Schritten in ihre jeweilige Zielposition und Zielausrichtung gebrachten und gedrehten Stückgütern eine palettierfähige Lage oder eine Vorgruppierung für eine palettierfähige Lage gebildet.

Die beschriebenen Positionierungsvorgänge, bei denen mindestens ein asymmetrisch im Manipulator befindliches Stückgut durch Verschiebung und gleichzeitige 270°-Drehung des Manipulators in seine vorgesehene Zielposition und Zielausrichtung für das anzustrebende Lagenbild der aus mehreren Stückgütern gebildeten Vorgruppierung und/oder palettierfähigen Lage gebracht wird, haben den besonderen Vorteil, dass damit die jeweils erforderlichen Auslenkungen und Bewegungsfahrten der jeweils zur Lagenbildung verwendeten Handhabungssysteme signifikant reduziert werden können, was bei den normalerweise mit hohen Geschwindigkeiten und entsprechend kurzen Stellzeiten arbeitenden Handhabungssystemen bzw. Handhabungsrobotern zu deutlich reduzierten mechanischen und Bauteilbelastungen beitragen kann. Die insgesamt reduzierten Auslenkungen und damit einhergehend reduzierten Bauteilbelastungen sind darauf zurückzuführen, dass die allfälligen Rotationen des Manipulators um jeweils etwa 270° bei einer definierten Zielposition für ein asymmetrisch im Manipulator befindlichen Stückgut, die sich am rechten oder linken Rand eines jeweiligen Lagenbildes befindet, die Stell- und Auslenkbewegungen des Manipulators zumindest teilweise ersetzt. Dies wird unmittelbar einleuchtend, wenn die Position des mindestens einen im Manipulator befindlichen Stückgutes betrachtet wird, die sich in Transportrichtung im hinteren Bereich der Klemmbacken des Manipulators befindet, während der in Transportrichtung gesehen vordere Bereich zwischen den Klemmbacken unbesetzt bleibt.

Da der Manipulator unmittelbar nach Erfassung des wenigstens einen Stückgutes zur Vermeidung von Kollisionen mit den unverändert weitertransportierten nachfolgenden Stückgütern ohne Verzögerung zu seiner Positionierungsbewegung ansetzen muss, die eine Links- oder Rechtsdrehung umfassen kann, müsste er bei einer 90°-Linksdrehung und gleichzeitiger Positionierung am linken Rand des Lagenbildes einen relativ weiten Weg zurücklegen. Dieser zurückzulegende Weg reduziert sich bei einer linkssinnigen 270°-Drehung und gleichzeitigen Positionierung des Stückgutes am linken Rand des Lagenbildes. Eine alternative 90°-Rechtsdrehung mit gleichzeitiger Positionierung des Stückgutes am linken Rand des Lagenbildes bietet dagegen keine sinnvolle Bewegungsvariante, da hierbei eine Kollision des Manipulators mit dem zuvorderst bewegten Stückgut der nachfolgenden Stückgüter droht, sofern der Manipulator nicht in schneller Distanzierungsbewegung in Transportrichtung beschleunigt wird. In entsprechender Weise müsste der Manipulator bei einer 90°-Rechtsdrehung und gleichzeitiger Positionierung des mindestens einen Stückgutes am rechten Rand des Lagenbildes einen relativ weiten Weg zurücklegen. Dieser zurückzulegende Weg reduziert sich bei einer rechtssinnigen 270°-Drehung und gleichzeitigen Positionierung des Stückgutes am rechten Rand des Lagenbildes in signifikanter Weise. Eine alternative 90°-Linksdrehung mit gleichzeitiger Positionierung des Stückgutes am rechten Rand des Lagenbildes bietet dagegen wiederum keine sinnvolle Bewegungsvariante, da hierbei eine Kollision des Manipulators mit dem zuvorderst bewegten Stückgut der nachfolgenden Stückgüter droht, sofern der Manipulator nicht in schneller Distanzierungsbewegung in Transportrichtung beschleunigt wird.

Das erfindungsgemäße Verfahren ersetzt somit bei einer unsymmetrischen oder asynchronen Beladung des Manipulators mit weniger Stückgütern als der Manipulator maximal erfassen kann einen Teil der unverzichtbaren Maximalauslenkungen bei der Positionierung der Stückgüter durch eine 270°-Drehung des Manipulators mitsamt den erfassten Stückgütern bzw. mitsamt dem erfassten mindestens einen Stückgut, so dass sich insgesamt - über eine Vielzahl von Bewegungszyklen gesehen - eine deutliche Reduzierung der Stellbewegungen und Maximalauslenkungen ergibt. Da die erwähnten 270°-Rotationsbewegungen des Manipulators mit deutlich weniger Bauteilbelastungen verbunden sind als die aufgrund der Massenträgheitsmomente besonders verschleißfördernden schnellen Stellbewegungen des Manipulators, führt die erfindungsgemäße Verfahrensvorschrift zur Positionierung der Stückgüter zu reduziertem Maschinenverschleiß und damit zu einer längeren Lebensdauer.

Da die Rotationsbewegungen zudem in aller Regel schneller ablaufen können als die übrigen Stell-, Verschiebe- und Positionierungsbewegungen des Manipulators, kann das erfindungsgemäße Verfahren unter Umständen sogar zu einer Reduzierung der Taktzeiten beitragen, ohne dass dabei die Bauteilbelastungen durch die geringfügig beschleunigten Stellbewegungen erhöht werden.

Wenn in diesem Zusammenhang oder auch im Zusammenhang der gesamten Beschreibung von Vorgruppierungen, von einer palettierfähigen Lage oder von einer palettierfähigen Lagenanordnung die Rede ist, so sind damit generell alle Stückgut-Zusammenstellungen innerhalb einer horizontalen Ebene - ggf. auch in zwei oder drei Ebenen übereinander gestapelt - gemeint, die in Richtung von nachgeordneten Handhabungs- und/oder Palettierungs- und/oder Verpackungsstationen weitertransportiert werden können. Generell ist bei den erfindungsgemäßen Verfahren davon auszugehen, dass zunächst ein hoher Ordnungsgrad der Stückgüter vorliegt, da diese als hintereinander bewegte Stückgüter zum Manipulator oder zu den Manipulatoren befördert werden. Dort wird diese Ordnung zunächst weitgehend aufgelöst, da die Stückgüter an unterschiedliche Positionen gebracht werden, wodurch jedoch der Ordnungsgrad der Stückgüter untereinander in Transportrichtung allmählich wieder zunimmt. Im weiteren, hier nicht mehr detailliert erläuterten Transportverlauf kann der Ordnungsgrad nochmals deutlich stärker zunehmen, indem Abstände der Lagenanordnungen oder Vorgruppierungen durch deren Aneinanderfügen und/oder Zusammenschieben aufgehoben und die Lagenanordnungen als weitgehend geschlossene Lagen wahlweise zusammengefasst werden, bspw. durch geeignete Umverpackungen. Wahlweise jedoch können die zusammengestellten Stückgüter auch in der jeweiligen Lagenanordnung gestapelt und/oder palettiert und erst anschließend mit Umverpackungen umhüllt bzw. ausgestattet werden.

Außerdem sei darauf hingewiesen, dass der Begriff der palettierfähigen Lage bzw. der palettierfähigen Lagenanordnung immer auch die Teillage bzw. Teillagenanordnung umfasst und umgekehrt.

Gemäß einer bevorzugten Ausführungsform der Erfindung wird beim Bilden der palettierfähigen Lage oder der Vorgruppierung für eine palettierfähige Lage das jeweils wenigstens eine vom wenigstens einen Manipulator insbesondere asymmetrisch erfasste Stückgut oder die vom Manipulator asymmetrisch erfasste Gruppe von Stückgütern durch seitliche Rotation abgetrennt und in eine jeweilige definierte relative Zielposition und Zielausrichtung gegenüber den nachfolgenden Stückgütern gebracht, wobei das wenigstens eine Stückgut bei einer Verbringung zur rechten Seite der geradlinigen Bewegungsbahn der nachfolgenden, hintereinander bewegten Stückgüter mittels einer Rechtsdrehung (rechtsseitiger Drehsinn bzw. Drehung im Uhrzeigersinn, insbesondere bei Drehung um eine vertikale Drehachse) bewegt wird, während das wenigstens eine Stückgut und/oder ein weiteres Stückgut bei einer Verbringung zur linken Seite der geradlinigen Bewegungsbahn der nachfolgenden, hintereinander bewegten Stückgüter mittels einer Linksdrehung (linksseitiger Drehsinn bzw. Drehung entgegen dem Uhrzeigersinn, insbesondere bei Drehung um eine vertikale Drehachse) bewegt wird. Diese unterschiedlichen Drehbewegungen können bei direkt aufeinanderfolgenden oder auch bei entfernt aufeinanderfolgenden Manipulierungsschritten jeweils unterschiedlich ablaufen. Die jeweils links- bzw. rechtssinnigen Drehbewegungen bei gleichzeitigem Verbringen zur linken bzw. rechten Seite vermeiden Kollisionen mit nachfolgenden Stückgütern, ohne dass der Manipulator nach der Erfassung der jeweils zu positionierenden Stückgüter deutlich gegenüber den nachfolgenden Stückgütern zu beschleunigen wäre.

Wenn im vorliegenden Zusammenhang, insbesondere im Zusammenhang mit einem sog. asynchronen Abgreifen von vertikalen Symmetrieebenen die Rede ist, die sich in erster Linie auf die Positionierungen der Stückgüter bzw. deren Relativpositionen zum Manipulator bzw. zu dessen Klemm- und/oder Greifmitteln beziehen, so sind diese vertikalen Symmetrieebenen definitionsgemäß senkrecht oder ungefähr senkrecht zur Horizontalförderebene einer Horizontalfördereinrichtung orientiert. Sinnvollerweise sind diese Symmetrieebenen, d.h. die erste Symmetrieebene, zweite und ggf. weitere Symmetrieebenen, auch senkrecht zur horizontal verlaufenden Transportrichtung und/oder in etwa senkrecht zu einer Längserstreckungsrichtung der nachfolgenden, hintereinander bewegten Stückgüter orientiert. Sofern sich der Leser diese Transportrichtung als horizontalen Vektorpfeil vergegenwärtigt, der parallel zur horizontalen Auflageebene der Horizontalfördereinrichtung sowie parallel zur normalerweise ebenfalls horizontal oder abschnittsweise horizontal verlaufenden Transporteinrichtung verläuft, so durchstößt dieser Vektorpfeil die senkrecht stehenden Symmetrieebenen ebenfalls im Wesentlichen senkrecht. Wie erwähnt, sind diese mindestens zwei Symmetrieebenen - eine bezieht sich auf die Stückgüter, die andere auf den Manipulator - in einem gewissen Abstand, sofern der Manipulator unsymmetrisch oder einseitig beladen ist. Falls die Symmetrieebenen zusammenfallen oder ungefähr zusammenfallen, liegt der Sonderfall des vollständig beladenen und/oder symmetrisch bzw. mittig beladenen Manipulators vor.

Es sei an dieser Stelle ergänzend erwähnt, dass es sich bei den Stückgütern, auf die sich die erwähnte erste vertikale Symmetrieebenen bezieht, insbesondere um die jeweilige Gesamtheit von Stückgütern handeln kann, die sich in dem jeweils betreffenden Arbeitstakt im Manipulator bzw. zwischen dessen beiden Klemmbacken befinden. Diese Gesamtheit der Stückgüter kann somit ggf. auch durch das Gesamtvolumen und/oder den Masseschwerpunkt der insgesamt im Manipulator befindlichen und vom Manipulator erfassten Stückgüter charakterisiert werden, sofern dies im Einzelfall zweckmäßig ist. In entsprechender Weise handelt es sich bei der zweiten vertikalen Symmetrieebene, die dem Manipulator zugeordnet ist, sinnvollerweise um diejenige Symmetrieebene, die durch den Mittelpunkt der Gesamtheit an Stückgütern verläuft, wenn der Manipulator vollständig beladen bzw. entsprechend seiner maximalen Erfassungskapazität beladen ist, was normalerweise auch eine mittige, symmetrische und/oder gleichmäßige Beladung mit Stückgütern impliziert. Wenn im Zusammenhang der Lokalisierung der zweiten vertikalen Symmetrieebene von einem Mittelpunkt der Gesamtheit an Stückgütern die Rede ist, so kann dies je nach Ausgestaltung der Stückgüter bspw. der Massenschwerpunkt der Gesamtheit an im Manipulator erfassten Stückgütern oder auch der volumetrische Mittelpunkt dieser Gesamtheit an Stückgütern sein.

Darüber hinaus sei ergänzend klargestellt, dass die sich auf den Manipulator beziehende zweite Symmetrieebene gleichermaßen auf dessen gegeneinander zustellbare Klemmbacken bezogen sein kann, so dass von einer mittigen bzw. außermittigen Anordnung der Stückgüter bzw. der jeweiligen Gesamtheit an gleichzeitig zwischen den Klemmbacken erfassten Stückgütern die Rede sein kann, sofern die auf die Stückgüter bzw. die Gesamtheit an jeweils erfassten Stückgütern bezogene erste Symmetrieebene mit der zweiten Symmetrieebene zusammenfällt bzw. von dieser beabstandet ist.

Auf alle die zuvor erwähnten Varianten der symmetrischen bzw. unsymmetrischen Anordnung der Stückgüter und/oder der synchronen bzw. asynchronen Beladung des Manipulators mit Stückgütern bezogen sei an dieser Stelle zudem klargestellt, dass die sich auf den Manipulator bzw. auf dessen Klemm- und/oder Greifelemente beziehende zweite Symmetrieebene nicht zwingend durch eine in etwa vertikale Rotationsachse des Manipulators verlaufen muss, da der Manipulator nicht zwangsläufig rotationssymmetrisch ausgestaltet sein muss, sondern ggf. auch eine unsymmetrische Gestaltung aufweisen kann, sofern dies aus konstruktiven und/oder aus dynamikbezogenen Gründen zweckmäßig sein sollte.

Ein asymmetrisches Greifen oder Erfassen der Stückgüter im Manipulator kann bspw. auch dadurch charakterisiert sein, dass die Länge der insgesamt erfassten Stückgüter in Transportrichtung geringer ist als die Gesamtlänge der gegeneinander zustellbaren Greif- und/oder Klemmelemente des Manipulators, wenn dieser bei der Erfassung der Stückgüter so ausgerichtet ist, dass die Längserstreckungsrichtungen seiner Greif- und/oder Klemmelemente in etwa parallel zur Transportrichtung orientiert sind, und dass eine nicht belegte Länge der Greif- und/oder Klemmelemente des Manipulators an einer Stirnseite der Stückgüter größer oder kleiner ist als an der gegenüberliegenden anderen Stirnseite. Dagegen stimmen diese nicht belegten Längenmaße bei symmetrischer Beladung des Manipulators ungefähr überein.

Das Verfahren kann zudem vorsehen, dass zum Bilden der palettierfähigen Lage oder der Vorgruppierung für eine palettierfähige Lage bei wenigstens einem von mehreren zeitlich aufeinanderfolgenden Schritten zumindest näherungsweise zeitgleich wenigstens zwei Stückgüter erfasst, hierauf folgend von den nachfolgenden Stückgütern durch seitliche Rotation aus der geradlinigen Bewegungsbahn der nachfolgenden Stückgüter räumlich abgetrennt und gemeinsam in ihre jeweilige definierte relative Zielposition und Zielausrichtung gegenüber den nachfolgenden Stückgütern gebracht werden. Diese erwähnte zeitgleiche Erfassung mehrerer Stückgüter meint in der Praxis den gemeinsamen Manipulationsschritt zweier oder mehr zeitglich erfasster Stückgüter, die während des Manipulationsschrittes in ihrer ursprünglichen benachbarten Anordnung verbleiben, die sie schon in der ursprünglichen Anordnung der hintereinander bewegten Stückgüter hatten. Diese benachbarte Anordnung bleibt normalerweise auch in der Vorgruppierung bzw. in der Lagenanordnung bestehen, kann aber ggf. auch aufgehoben werden, bspw. durch einen separaten Verschiebe- und/oder Drehvorgang, dem eines oder mehrere dieser Stückgüter unterzogen werden können.

Darüber hinaus kann das Verfahren vorsehen, dass zum Bilden der palettierfähigen Lage oder der Vorgruppierung für eine palettierfähige Lage bei wenigstens zwei zeitlich - unmittelbar oder beabstandet - aufeinanderfolgenden Schritten eine unterschiedliche oder jeweils gleiche Anzahl an Stückgütern klemmend und/oder formschlüssig und/oder kraftschlüssig erfasst und von den nachfolgenden Stückgütern durch seitliche Rotation aus der geradlinigen Bewegungsbahn der nachfolgenden Stückgüter jeweils räumlich abgetrennt und in eine jeweilige definierte relative Zielposition und Zielausrichtung gegenüber den nachfolgenden Stückgütern gebracht wird, wobei beispielsweise das wenigstens eine erfasste Stückgut im Rahmen eines ersten der wenigstens zwei zeitlich aufeinanderfolgenden Schritte bei einer Verbringung zur rechten Seite der geradlinigen Bewegungsbahn der nachfolgenden Stückgüter mittels einer Rechtsdrehung bewegt wird, und wobei das wenigstens eine Stückgut im Rahmen eines zweiten der wenigstens zwei zeitlich aufeinanderfolgenden Schritte bei einer Verbringung zur linken Seite der geradlinigen Bewegungsbahn der nachfolgenden Stückgüter mittels einer Linksdrehung bewegt wird.

Gemäß einer Ausführungsform der Erfindung werden die in Transportrichtung hintereinander angeordneten Stückgüter in mindestens einer Reihe ohne Abstände oder mit minimalen Abständen unmittelbar aufeinanderfolgend in Transportrichtung als sogenannte geschlossene Formation in den Erfassungsbereich des Manipulators der Handhabungsvorrichtung bewegt. Aus dieser geschlossenen Formation wird jeweils wenigstens ein transportiertes Stückgut klemmend und/oder kraftschlüssig und/oder formschlüssig erfasst, von der geschlossenen Formation räumlich abgetrennt und in eine definierte relative Zielposition und Zielausrichtung gegenüber nachfolgenden Stückgütern der Formation gebracht. Mit dem Begriff der geschlossenen Formation ist insbesondere eine weitgehend lückenlose Aufeinanderfolge von Stückgütern gemeint, die hintereinander transportiert werden. Die geschlossene Formation kann beispielsweise als Endlos-Formation transportiert werden, die keine Unterbrechung aufweist und eine beliebige Anzahl von Stückgütern umfasst.

Die Formation im Sinne der vorliegenden Erfindung kann gemäß einer alternativen Ausführungsform eine endliche Länge haben und eine begrenzte Zahl von Stückgütern umfassen, wonach eine Lücke und einer solchen Lücke ggf. eine weitere solche Formation folgen kann, die nachfolgend transportiert wird. Eine solche Abfolge kann sich wiederholen, ggf. auch mehrfach, vielfach oder in unbestimmter Zahl, vorzugsweise in regelmäßiger Abfolge, ggf. jedoch auch in zyklisch regelmäßigen Mustern oder auch in unregelmäßiger Aufeinanderfolge. Eine solche Formation wird auch als getaktete Formation bezeichnet. Die geschlossenen Reihen einer solchermaßen getakteten Formation können grundsätzlich jeweils eine beliebige Anzahl von Stückgütern umfassen. Aus diesen geschlossenen Reihen der getakteten Formationen wird jeweils wenigstens ein transportiertes Stückgut klemmend und/oder kraftschlüssig und/oder formschlüssig erfasst, von der lückenlosen Reihe der getakteten Formation räumlich abgetrennt und in eine definierte relative Zielposition und/oder Zielausrichtung gegenüber nachfolgenden Stückgütern der getakteten Formation gebracht, wobei mindestens ein zuvorderst befindliches Stückgut der jeweiligen Reihe mittels des Manipulators erfasst und von der Reihe abgegriffen wird.

Gemäß einer weiteren Auführungsform können die in mindestens einer Reihe bewegten Stückgüter mit gleichen oder variablen Lücken voneinander in getaktetem oder zyklisch getaktetem Zulauf in Transportrichtung in den Erfassungsbereich des Manipulators bewegt und dort von den Klemm- und/oder Greifmitteln des Manipulators erfasst und unter räumlicher Abtrennung von den jeweils nachfolgenden Stückgütern in die jeweiligen definierten relativen Zielpositionen und Zielausrichtungen gebracht werden. D.h., eine weitere, auch von den zuvor genannten Varianten abweichende Option, die sich gleichwohl auf einige Ausführungsvarianten des erfindungsgemäßen Verfahrens zum Umgang mit hintereinander bewegten Stückgütern und/oder der erfindungsgemäßen Vorrichtung zum Umgang mit hintereinander bewegten Stückgütern oder auch auf mehrere Ausführungsvarianten dieses Verfahrens bzw. dieser Vorrichtung beziehen kann, können die in definierten Reihen mit darin jeweils definierten Lücken zwischen den einzelnen Stückgütern bewegten und/oder zu einem - insbesondere Manipulationsbereich bzw. Erfassungsbereich genannten - Bereich beförderten, mindestens zwei unmittelbar aufeinanderfolgenden Stückgüter jeweils in getakteten Formationen befördert bzw. transportiert werden.

Mit dem Begriff der getakteten Formation und/oder des getakteten Zulaufs kann somit auch eine weitgehend regelmäßige Aufeinanderfolge von in Reihe beförderten Stückgütern gemeint sein, wobei die Stückgüter jeweils mit definierten Lücken voneinander in Reihe hintereinander transportiert werden. Die mit definierten Lücken zwischen den Stückgütern beaufschlagten Reihen im Sinne der vorliegenden Erfindung können jeweils eine endliche Länge haben und eine begrenzte Zahl von Stückgütern umfassen, wonach ggf. eine größere Lücke und einer solchen größeren Lücke ggf. eine weitere solche Reihe mit jeweils in definierten Lücken aufeinander folgenden Stückgütern folgen kann, die nachfolgend transportiert wird. Eine solche Abfolge kann sich wiederholen, ggf. auch mehrfach, vielfach oder in unbestimmter Zahl, vorzugsweise in regelmäßiger Abfolge, ggf. jedoch auch in zyklisch regelmäßigen Mustern oder auch in unregelmäßiger Aufeinanderfolge. Die mit definierten Lücken zwischen aufeinander folgenden Stückgütern innerhalb einer Reihe ausgestatteten so genannten getakteten Formationen können grundsätzlich jeweils eine beliebige Anzahl von Stückgütern umfassen. Aus diesen Reihen der getakteten Formation wird jeweils wenigstens ein transportiertes Stückgut klemmend und/oder kraftschlüssig und/oder formschlüssig erfasst, von der getakteten Formation räumlich abgetrennt und in eine definierte relative Zielposition und/oder Zielausrichtung gegenüber nachfolgenden Stückgütern der Formation gebracht, wobei meist ein zuvorderst befindliches Stückgut der jeweiligen Reihe mittels des Manipulators erfasst und von der Reihe abgegriffen wird.

Gemäß einer weiteren Ausführungsform werden bei einem Verfahren, bei dem die Stückgüter in mindestens einer Reihe in geschlossener Formation oder mit gleichen oder variablen Lücken voneinander beabstandet in getaktetem oder zyklisch getaktetem Zulauf zugeführt werden, in den wenigstens zwei zeitlich aufeinanderfolgenden Schritten jeweils ein zuvorderst in der geschlossenen Formation oder in der getakteten Reihe transportiertes Stückgut oder mehrere zuvorderst in der geschlossenen Formation oder in der getakteten Reihe transportierte Stückgüter erfasst und entsprechend obiger Beschreibung manipuliert.

Gemäß einer optionalen Ausführungsform des Verfahrens kann vorgesehen sein, dass das jeweils vom Manipulator mindestens eine erfasste Stückgut unmittelbar vor oder bei Einleitung seiner Rotation um die vertikale Achse des Manipulators durch Distanzierung in Transportrichtung und durch zumindest kurzzeitige Beschleunigung mit einer Bewegungskomponente parallel zu einer geradlinigen Bewegungsbahn der nachfolgend in Reihe oder Formation transportierten Stückgüter räumlich abzutrennen und in Richtung einer jeweils definierten relativen Zielposition und Zielausrichtung gegenüber den nachfolgenden Stückgütern zu bringen. Diese kurzzeitige Beschleunigung und Distanzierung kann insbesondere im Hinblick auf eine daran anschließende besonders sichere, kollisionsfreie Rotation des Manipulators mit dem mindestens einen erfassten Stückgut vorteilhaft sein.

Das Verfahren kann in vorteilhafter Weise realisiert werden, indem die Manipulationsschritte zur Erfassung und Positionierung der Stückgüter über einen bestimmten und vorzugsweise als Deltakinematik- Roboter ausgebildeten Manipulator oder einen Teil eines Deltakinematik-Roboters bildenden Manipulators umgesetzt werden. Weiterhin kann es bei dem Verfahren von Vorteil sein, wenn die jeweilige Anzahl an Stückgütern in den Manipulationsschritten bzw. in den wenigstens zwei zeitlich aufeinanderfolgenden Schritten jeweils durch mindestens zwei sich gegenüberliegende Klemm- und/oder Greifmittel des bestimmten Manipulators klemmend und/oder kraftschlüssig und/oder formschlüssig erfasst und nach Verbringen in ihre jeweilige definierte Zielposition mittels der mindestens zwei sich gegenüberliegenden Klemm- und/oder Greifmittel freigegeben werden. Diese Klemm- und/oder Greifmittel sind bspw. als gegeneinander zustellbare Greifbacken o. dgl. gebildet, die ein schnelles Erfassen, Verschieben, Positionieren und Freigeben der Stückgüter in der gewünschten Geschwindigkeit mit der gewünschten Stellpräzision erlauben. Auch andere Manipulatoren können vorteilhaft eingesetzt werden, bspw. solche, die als Mehrachsroboter oder als Teile von solchen Mehrachsrobotern ausgebildet sind.

Die bekannten Deltakinematik-Roboter bzw. sog. Tripode besitzen eine hohe Genauigkeit und können darüber hinaus zur Handhabung der jeweiligen Stückgüter mit hoher Geschwindigkeit bewegt und verfahren werden. Um die jeweiligen Stückgüter entgegennehmen und nach der Handhabung bzw. Positionierung wieder freigeben zu können, weisen bekannte Tripode bewegbare und steuerbare Manipulatoren auf. So können diese Manipulatoren bspw. pneumatisch, hydraulisch oder elektrisch angesteuert werden, so dass hierzu mit dem entsprechenden Manipulator Leitungsverbindungen gekoppelt sind. Allerdings können diese Leitungsverbindungen geeignet sein, die Bewegungsfreiheit des Tripods einzuschränken. Zudem müssen die Leitungsverbindungen sicher verlegt werden, so dass das Risiko einer Beschädigung von Leitungsverbindungen bei Betrieb des Tripods ausgeschlossen werden kann. Nicht zuletzt aus diesem Grunde besitzen bisher eingesetzte Deltakinematik-Roboter aufgrund der umständlichen Koppelung zwischen einem Manipulator und einem zugeordneten Aktor einen komplexen Aufbau und eine teilweise eingeschränkte Bewegungsfreiheit.

Das erfindungsgemäße Verfahren zeigt seine Vorteile insbesondere beim Einsatz eines derartigen Deltakinematik-Roboters als Manipulator, die zwar relativ weite Auslenkungen realisieren können, um die Stückgüter an gewünschter Stelle zu positionieren. Doch weisen die Deltakinematik-Roboter typischerweise einen optimalen Bewegungsraum auf, der einen Bereich mit geringeren Auslenkungen und ohne extreme Stellbewegungen beschreibt. Sofern sich der Manipulator in diesem optimalen Bewegungsraum aufhalten kann, sind schnellere Stellbewegungen bei geringeren Bauteilbelastungen und damit auch geringerem Bauteil- und Antriebsverschleiß möglich. Aus diesem Grund bietet das erfindungsgemäße Verfahren mit den 270°-Drehungen des Manipulators mitsamt der erfassten Stückgüter bzw. mitsamt dem erfassten mindestens einen Stückgut die größere Wahrscheinlichkeit, dass sich der Manipulator über längere Phasen seiner Stellbewegungen innerhalb des optimalen Bewegungsraumes aufhalten und extreme Stellbewegungen vermeiden kann, da sich insgesamt - über eine Vielzahl von Bewegungszyklen gesehen - eine deutliche Reduzierung der Stellbewegungen und Maximalauslenkungen ergibt. Da die erwähnten 270°-Rotationsbewegungen des Manipulators mit deutlich weniger Bauteilbelastungen verbunden sind als die aufgrund der Massenträgheitsmomente besonders verschleißfördernden schnellen Stellbewegungen des Manipulators, führt die erfindungsgemäße Verfahrensvorschrift zur Positionierung der Stückgüter zu reduziertem Maschinenverschleiß und damit zu einer längeren Lebensdauer. Da zudem die Rotationsbewegungen der drehbaren Klemmbacken zudem in aller Regel schneller ablaufen können als die übrigen Stell-, Verschiebe- und Positionierungsbewegungen des Manipulators bzw. des Deltakinematik-Roboters, kann das erfindungsgemäße Verfahren unter Umständen sogar zu einer Reduzierung der Taktzeiten beitragen, ohne dass dabei die Bauteilbelastungen durch die geringfügig beschleunigten Stellbewegungen erhöht werden.

Bei allen beschriebenen Verfahrensvarianten kann es jeweils von Vorteil sein, wenn jeweils nicht erfasste Stückgüter von verbleibenden hintereinander bewegten Stückgütern während der klemmenden und/oder form- und/oder kraftschlüssigen Erfassung, der räumlichen Abtrennung und/oder und der Überführung des wenigstens einen Stückgutes in eine definierte relative Zielposition und Zielausrichtung unterbrechungsfrei und/oder mit unveränderter Transportgeschwindigkeit weitertransportiert werden. Das gilt typischerweise zumindest solange, bis das erfasste Stückgut in seine Zielposition und Zielausrichtung gebracht wurde, so dass das nächst folgende Stückgut vom zwischenzeitlich zu den nachfolgenden Stückgütern zurückbewegten Manipulator erfasst und in seine jeweilige Zielposition und Zielausrichtung gebracht werden kann. Dieser Vorgang wiederholt sich so lange, bis die verschiedenen Zielpositionen und Zielausrichtungen der nacheinander positionierten und ausgerichteten Stückgüter eine definierte bzw. gewünschte Anordnung bzw. Gruppierung bilden. Diese Anordnung bzw. Gruppierung kann insbesondere ein Lagenbild darstellen, das es bspw. ermöglicht, die solchermaßen zusammengestellten Stückgüter in Lagen zu stapeln und/oder zu palettieren.

Außerdem kann das Verfahren wahlweise oder zusätzlich vorsehen, dass das wenigstens eine Stückgut bei Erreichen oder unmittelbar nach Erreichen seiner Zielposition und Zielausrichtung ohne Unterbrechung und/oder Geschwindigkeits- und/oder Richtungsänderung weitertransportiert werden kann.

Vorzugsweise wird bei dem jeweiligen Manipulationsschritt zum Erreichen der Zielposition und Zielausrichtung dem wenigstens einem erfassten Stückgut gegenüber einer Transportgeschwindigkeit der nachlaufenden Stückgüter wenigstens eine weitere Geschwindigkeits- und/oder Richtungs- und/oder Drehbewegungskomponente aufgeprägt. Dies erfolgt insbesondere im Erfassungsbereich des Manipulators der Vorrichtung. Die Änderung der Geschwindigkeit und/oder der Richtung des mindestens einen erfassten Stückgutes wird diesem insbesondere durch den Manipulator aufgeprägt. Dieser kann zusätzlich zum Drehen des mindestens einen erfassten Stückgutes ausgebildet sein. Beispielsweise befindet sich der oben beschriebene Greiferkopf an einem Drehgelenk und kann durch Rotation um einen definierten Winkel von insbesondere 270° die Ausrichtung der zwischen den Klemmbacken erfassten Stückgüter verändern.

Die Drehbewegungen des wenigstens einen Manipulators können bei wenigstens zwei aufeinanderfolgenden Schritten zum jeweiligen Verbringen von Stückgütern von der geschlossenen Formation bzw. der in Reihe bewegten Stückgüter in die jeweils vorgesehenen Zielpositionen und Zielausrichtungen mit jeweils gleichsinnigem Drehsinn erfolgen, insbesondere oder wahlweise unter Weiterdrehung des Manipulators über einen Drehwinkel von 270° hinaus, nachdem ein Stückgut oder eine erfasste Gruppe von mehreren Stückgütern an der vorgesehenen Zielposition abgesetzt wurde. Insbesondere kann der mindestens eine Manipulator einer Vorrichtung oder Handhabungsvorrichtung zum Umgang mit hintereinander bewegten Stückgütern - dies kann bspw. der oben erwähnte Parallelkinematik-Roboter sein - das wenigstens eine transportierte Stückgut zum Überführen in die definierte relative Zielposition und Zielausrichtung mit einer Drehbewegung um einen Winkel von zumindest näherungsweise 270° beaufschlagen. Hinzu kommt, dass der mindestens eine Manipulator für die Drehbewegung eine vorzugsweise in etwa vertikale Achse bereitstellt und zur gegenüber der Achse versetzten klemmenden und/oder kraft- und/oder formschlüssigen Entgegennahme des mindestens einen Stückgutes ausgebildet ist. Außerdem kann vorgesehen sein, dass der mindestens eine Manipulator zumindest zeitweise mit der Drehbewegung überlagert zusammen mit der Achse und dem jeweiligen klemmend und/oder formschlüssig entgegengenommenen mindestens einen Stückgut in Richtung der jeweiligen Zielposition bewegbar ausgebildet ist.

Insbesondere kann es sinnvoll sein, den Manipulator bzw. dessen mindestens zwei Klemm- und/oder Greifmittel nach einer Rotation um eine vertikale Achse von etwa 270°, nach Erreichung einer jeweiligen Zielposition und Zielausrichtung sowie nach Freigabe des dort positionierten mindestens einen Stückgutes ohne Rückdrehung und mit einer weiteren Rotation der mindestens zwei Klemm- und/oder Greifmittel um etwa 90° wenigstens ein weiteres zu positionierendes und/oder neu auszurichtendes Stückgut von der Reihe bzw. der geschlossenen Formation erfassen zu lassen und anschließend dieses wenigstens eine erfasste Stückgut mit einer erneuten Rotation um die vertikale Achse des Manipulators bzw. der Klemm- und/oder Greifmittel um etwa 270° in eine weitere Zielposition und Zielausrichtung innerhalb des Erfassungsbereiches zu verbringen. Insbesondere diese optionale Verfahrensvariante, bei welcher der Manipulator zwischen den aufeinanderfolgenden Manipulationsschritten immer wieder um einen Winkel von etwa 90° um eine ungefähr horizontale Drehachse weitergedreht werden kann, ohne dass zeit- und/oder platzraubende Rückdrehungen notwendig sind, erlaubt material- und zeitschonende Manipulationsabläufe, bei denen zudem die Bewegungsfolgen des Manipulators und/oder seiner Klemm- und/oder Greifmittel hinsichtlich des zur Verfügung stehenden Raumes innerhalb des Erfassungsbereichs und insbesondere hinsichtlich der Vermeidung aller störenden Kollisionen mit Stückgütern optimiert werden können. Jede eingesparte Rückdrehung des Manipulators bzw. seiner Klemm- und/oder Greifmittel ermöglicht eine engere Vorbeiführung der Greifbacken bzw. des Manipulators an Stückgütern, ohne dass hierdurch eine Kollisionsgefahr besteht, da insbesondere bei Manipulatoren mit größeren Aufnahmekapazitäten für bspw. drei oder vier hintereinander angeordnete Stückgüter ein relativ großer Platzbedarf für allfällige Rotationsbewegungen der relativ ausladenden Klemm- und/oder Greifmittel beseht, was bei Rückdrehungen des Greiferkopfes nach jeder vorhergehenden Positionierung zu einer deutlichen Erhöhung der Kollisionsgefahr mit im Erfassungsbereich befindlichen Stückgütern führte. Um diese Kollisionsgefahr auszuschließen, muss der Manipulator bei Rückbewegungen zur Aufnahme neuer Stückgüter an vorderer Position der nachtransportierten Reihe oder Formation größere Ausweichbewegungen machen, die zu einer unerwünschten Zeitverzögerung für die Rückbewegungen und -drehungen führen.

Die hier beschriebenen Drehbewegungen erfolgen jeweils vorzugsweise um eine in etwa vertikale Achse, welche sich zwischen dem jeweiligen wenigstens einen erfassten Stückgut und der jeweiligen definierten Zielposition befindet. Insbesondere wird dem wenigstens ein zuvorderst transportiertes Stückgut aus der geschlossenen Formation oder aus der Reihe von beabstandeten Stückgütern erfasst und um einen Winkel von zumindest näherungsweise 270° um die Achse gedreht, die sich zwischen dem jeweiligen wenigstens einen erfassten Stückgut und der jeweiligen definierten Zielposition befindet.

Es kann zudem optional vorgesehen sein, dass die Achse der Drehbewegung im Verlauf der Drehbewegung zumindest zeit- und/oder abschnittsweise in Richtung der jeweiligen definierten Zielposition bewegt wird. Wahlweise kann die Achse im Verlauf der Drehbewegung zumindest zeitweise in Richtung der jeweiligen definierten Zielposition mit einer Geschwindigkeit bewegt werden, die größer ist als eine Transportgeschwindigkeit der geschlossenen Formation oder größer ist als eine Transportgeschwindigkeit der Reihe von hintereinander angeordneten, zueinander beabstandeten Stückgütern. Außerdem kann es ggf. sinnvoll sein, dass die Achse im Verlauf der Drehbewegung zumindest zeitweise in einer bestimmten Position verweilt.

Eine weitere Ausführungsvariante des Verfahrens sieht vor, dass die Achse im Verlauf der Drehbewegung zumindest zeitweise in Richtung der jeweiligen definierten Zielposition mit einer Geschwindigkeit bewegt wird, die größer ist als die Transportgeschwindigkeit der geschlossenen Formation oder eine Transportgeschwindigkeit der Reihe von hintereinander angeordneten, zueinander beabstandeten Stückgütern, wobei zeitlich anschließend die Achse im Verlauf der Drehbewegung zumindest zeitweise in einer bestimmten Position verweilt.

Der beschriebene Verfahrensschritt bzw. die zuvor beschriebenen Verfahrensschritte oder auch einzelne der zuvor beschriebenen Verfahrensschritte erfolgen insbesondere mittels einer erfindungsgemäßen Vorrichtung, insbesondere mittels einer Handhabungsvorrichtung, die dem Umgang mit in mindestens einer Reihe von hintereinander bewegten Stückgütern dient/dienen, welche Vorrichtung wenigstens eine erste Transporteinrichtung und mindestens einen Manipulator umfasst. Die wenigstens eine erste Transporteinrichtung dient der Zuführung der in einer Reihe zueinander beabstandeten oder unmittelbar aufeinanderfolgenden, insbesondere annähernd ohne Beabstandung als geschlossene Formation angeordneten bzw. bewegten Stückgüter zu einem Erfassungsbereich des mindestens einen Manipulators.

Der mindestens eine Manipulator ist typischer- /vorzugsweise zum klemmenden und/oder formschlüssigen und/oder kraftschlüssigen Erfassen und/oder Entgegennehmen mindestens eines Stückgutes der Formation oder der Reihe innerhalb seines Erfassungsbereiches sowie zum Abtrennen und Überführen des mindestens einen Stückgutes der Formation oder der Reihe in eine Zielposition innerhalb seines Erfassungsbereiches ausgebildet. Der Manipulator kann beispielsweise als Parallelkinematik- Roboter ausgebildet oder Teil eines solchen sein, insbesondere als Tripod, Parallelkinematik-Roboter oder Portalroboter, Mehrachsroboter etc., wie er bereits beschrieben oben beschrieben worden ist.

Gemäß einer Ausführungsform können dem mindestens einen Manipulator wenigstens zwei gegenüberliegend, insbesondere paarweise gegenüberliegend angeordnete Klemm- und/oder Greifelemente zugeordnet sein, welche zum klemmenden und/oder kraft- und/oder formschlüssigen Erfassen sowie zum Abtrennen und Überführen des jeweiligen mindestens einen Stückgutes bzw. der mehreren erfassten Stückgüter in die Zielposition und/oder Zielausrichtung miteinander, insbesondere jeweils paarweise miteinander zusammenwirken. Diese Definition der Klemm- und Greifelemente des Manipulators umfasst bspw. auch Doppelgreifer oder Mehrfachgreifer o. dgl., die mehrere Greifpaare aufweisen können, deren Greifpaare jedoch insbesondere paarweise zusammenwirken, um bspw. Stückgütern in mehreren parallelen, insbesondere voneinander beabstandeten Reihen aufnehmen, erfassen und/oder greifen zu können. Es sei somit festgehalten, dass die Zahl von wenigstens zwei gegenüberliegend angeordneten Klemm- und/oder Greifelementen ein Minimum definiert. Es ist damit nicht ausgeschlossen, dass ggf. mehrere Klemm- und/oder Greifelemente in der definierten Weise ausgestaltet sind; zudem ist nicht ausgeschlossen, dass mehr als zwei Elemente vorhanden sind. Der Manipulator weist somit gemäß einer Ausführungsform mindestens einen Greiferkopf mit starren, beweglichen und/oder gegeneinander zustellbaren Klemmbacken auf, zwischen denen das mindestens eine Stückgut geklemmt und dadurch entsprechend zur Zielposition bewegt werden kann.

Dabei ist vorgesehen, dass wenigstens eine, von den Klemm- und/oder Greifmitteln des wenigstens einen Manipulators erfasste Stückgut definierte erste vertikale und in etwa senkrecht zu einer Transportrichtung der Stückgüter und/oder einer Längserstreckungsrichtung der geschlossenen Formation orientierte Symmetrieebene beabstandet ist von einer hierzu in etwa parallel ausgerichteten zweiten vertikalen Symmetrieebene, die durch den Manipulator bzw. durch dessen Klemm- und/oder Greifmittel definiert ist. Der Manipulator ist weiterhin derart ausgebildet, das er das wenigstens eine transportierte Stückgut zum Überführen in die definierte relative Zielposition und Zielausrichtung mit einer Drehbewegung um einen Winkel von zumindest näherungsweise 270°m insbesondere um einen Winkel von genau 270°, beaufschlagen kann, wobei der mindestens eine Manipulator für die Drehbewegung eine vorzugsweise in etwa vertikale Achse bereitstellt und zur gegenüber der Achse versetzten klemmenden und/oder kraft- und/oder formschlüssigen Entgegennahme des mindestens einen Stückgutes ausgebildet ist.

Die Vorrichtung kann alternativ oder zusätzlich zu den beschriebenen Merkmalen ein oder mehrere Merkmale und / oder Eigenschaften des zuvor beschriebenen Verfahrens umfassen. Ebenfalls kann das Verfahren alternativ oder zusätzlich einzelne oder mehrere Merkmale und / oder Eigenschaften der beschriebenen Vorrichtung aufweisen.

Gemäß einer weiteren Ausführungsform der Erfindung ist vorgesehen, dass die Stückgüter mittels wenigstens einer vorzugsweise unterbrechungsfrei und/oder mit kontinuierlicher Geschwindigkeit angetriebenen Horizontalfördereinrichtung der Vorrichtung bzw. Handhabungsvorrichtung in den Erfassungsbereich des Manipulators der Vorrichtung und/ oder in die Zielposition und Zielausrichtung innerhalb des Erfassungsbereichs des Manipulators gelangen. Vorzugsweise ist die Horizontalfördereinrichtung dem Erfassungsbereich des mindestens einen Manipulators zugeordnet und/oder korrespondiert zumindest weitgehend mit dem Erfassungsbereich des Manipulators. Gemäß einer Ausführungsform der Erfindung erzeugt die Horizontalfördereinrichtung einen kontinuierlichen Vorschub in Transportrichtung der Formation.

Dieser Horizontalfördereinrichtung, die sich normalerweise zumindest über einen kurzen Wegabschnitt vor dem Erfassungsbereich, dem Erfassungsbereich und/oder zumindest über einen kurzen Wegabschnitt hinter dem Erfassungsbereich des Manipulators erstreckt, ist typischerweise mindestens eine Transportvorrichtung vorgeordnet. Vorzugsweise schließt die Horizontalfördereinrichtung dabei unmittelbar an die Transporteinrichtung an. Insbesondere werden die in mindestens einer Reihe bzw. als Formation ankommende Stückgüter mittels mindestens einer vorzugsweise unterbrechungsfrei und/oder mit kontinuierlicher Transportgeschwindigkeit angetriebenen Transporteinrichtung zum Erfassungsbereich des Manipulators und/oder zur Horizontalfördereinrichtung befördert und/oder an diese übergeben. Wahlweise können auch zwei oder mehr solche Transporteinrichtungen, die insbesondere parallel angeordnet sein können, eingesetzt werden.

Weiterhin ist vorgesehen, dass sich die Horizontalfördereinrichtung und die mindestens eine Transporteinrichtung jeweils mit konstanter Geschwindigkeit bewegen, wobei die Geschwindigkeit der Horizontalfördereinrichtung annähernd oder exakt mit der Transportgeschwindigkeit der mindestens einen Transporteinrichtung und somit mit der Transportgeschwindigkeit der in der in Reihe nacheinander angeordneten oder in einer geschlossenen Formation befindlichen Stückgüter übereinstimmen kann. Bei der Horizontalfördereinrichtung kann es sich beispielsweise analog zur Transporteinrichtung um einen Endlosförderer, eine Fördermatte o.ä. handeln, auf deren Oberseite die Stückgüter transportiert werden. Wie erst nachfolgend aus den Figuren deutlich werden wird, kann es sich bei der Horizontalfördereinrichtung wahlweise auch um einen sog. Transporttisch, Gleittisch oder Gruppiertisch o. dgl. handeln, der für die weitgehend oder annähernd konstante Bewegung der darauf befindlichen Stückgüter und/oder der darauf mittels des Manipulators in die jeweilige Zielposition verschobenen und/oder in die jeweilige Zielausrichtung gedrehten Stückgüter sorgen kann. Alternativ kann vorgesehen sein, dass die Horizontalfördereinrichtung beispielsweise aus mehreren nebeneinander angeordneten Förderbändern besteht, die sich alle mit gleicher Geschwindigkeit bewegen.

Auch müssen die Transporteinrichtung und die Horizontalfördereinrichtung nicht zwingend durch zwei voneinander unabhängig angetriebene Förderer gebildet werden. Stattdessen kann wahlweise auch vorgesehen sein, dass es sich hierbei nur um räumlich voneinander getrennte und in Förderrichtung aneinander anschließende Bereiche eines einzigen Förderers handelt. Ein erster Transportbereich dient in diesem Fall insbesondere dem Heranführen der zumindest weitgehend abstandslos in mindestens einer Reihe als Formation angeordneten Stückgüter. Ein zweiter Manipulationsbereich bzw. Horizontalförderbereich dient dann insbesondere der Manipulation von mindestens einem Stückgut der Formation bzw. einer Gruppe von benachbarten Stückgütern der Formation durch den Manipulator. Wichtig ist in diesem Zusammenhang, dass sich Stückgüter der Formation, die sich zwar im Erfassungsbereich des Manipulators befinden, aber durch diesen (noch) nicht erfasst und bearbeitet werden, annähernd kontinuierlich und vorzugsweise mit gleichbleibender Geschwindigkeit weiterbewegen.

Im Zusammenhang der vorliegenden Beschreibung ist die Horizontalfördereinrichtung oftmals in Wechselwirkung und/oder im räumlichen oder funktionellen Zusammenhang mit den jeweiligen Zielpositionen für die Stückgüter definiert. Aus diesem Grund ist auch oftmals, im Interesse einer Vermeidung von Unklarheiten, in der Beschreibung die Zielposition exakt definiert und ihr Zusammenhang mit der Horizontalfördereinrichtung beschrieben. Auf diese Weise wird an einigen Stellen klargestellt, dass die Zielpositionen und/oder -ausrichtungen normalerweise mittels der Stellbewegungen des Manipulators erreicht werden. Dies kann entweder auf direktem Wege erfolgen. Die endgültigen Zielpositionen können jedoch auch indirekt erreicht werden, indem bspw. vom Manipulator erfasste Stückgüter als Schieber für bereits vorpositionierte Stückgüter eingesetzt werden. Auch hierbei wirkt der Manipulator als Positionierungswerkzeug, jedoch unter Zwischenschaltung von erfassten und anschließend ebenfalls zu positionierenden Stückgütern.

Die erfindungsgemäße Vorrichtung umfasst eine Steuerungseinrichtung , welche mit dem mindestens einen Manipulator in Verbindung steht und über welche der mindestens eine Manipulator zum Manipulieren des mindestens einen Stückgutes gemäß vorbeschriebenen Verfahrens angesteuert werden kann. wobei die Steuerungseinrichtung Informationen zu einer aus einer Vielzahl an Stückgütern zu bildenden Gruppierung für eine palettierfähige Lage aufweist bzw. abgespeichert hat. Dabei kann zudem vorteilhaft sein, wenn die jeweiligen Zielpositionen und Zielausrichtungen der Stückgüter einen Teil der Informationen bilden und dem jeweiligen mindestens einen Stückgut eine bestimmte Lage und/oder relative Orientierung in der jeweiligen Gruppierung zuordnen.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.

Figuren 1A bis 1C zeigen das Erfassen einer unterschiedlichen Anzahl von Stückgütern durch einen Manipulator der Handhabungsvorrichtung.

Figuren 2 bis 11 zeigen schematisch einen zeitlichen Ablauf eines erfindungsgemäßen Verfahrens zum Umgang mit in mindestens einer Reihe hintereinander bewegten Stückgütern durch eine entsprechende Handhabungsvorrichtung.

Figur 12 zeigt eine schematische Perspektivansicht einer Ausführungsform einer Handhabungs- und/oder Manipulationsvorrichtung zur Durchführung einer Variante oder mehrerer Varianten des erfindungsgemäßen Verfahrens.

Figur 13 zeigt eine schematische Detailansicht eines unteren Teils der Vorrichtung aus Figur 12.

Figur 14 zeigt eine schematische Querschnittsdarstellung durch die Vorrichtung aus dem Ausführungsbeispiel gemäß Figur 12 und Figur 13.

Für gleiche oder gleich wirkende Elemente der Erfindung werden jeweils identische Bezugszeichen verwendet. Ferner werden der Übersicht halber nur solche Bezugsziffern in den einzelnen Figuren verwendet, die für die Beschreibung der jeweiligen Figur erforderlich sind. Die zeichnerisch dargestellten Ausführungsformen stellen lediglich Beispiele dar, wie die erfindungsgemäße Vorrichtung und das erfindungsgemäße Verfahren ausgestaltet sein können und stellen keine abschließende Begrenzung der Erfindung dar.

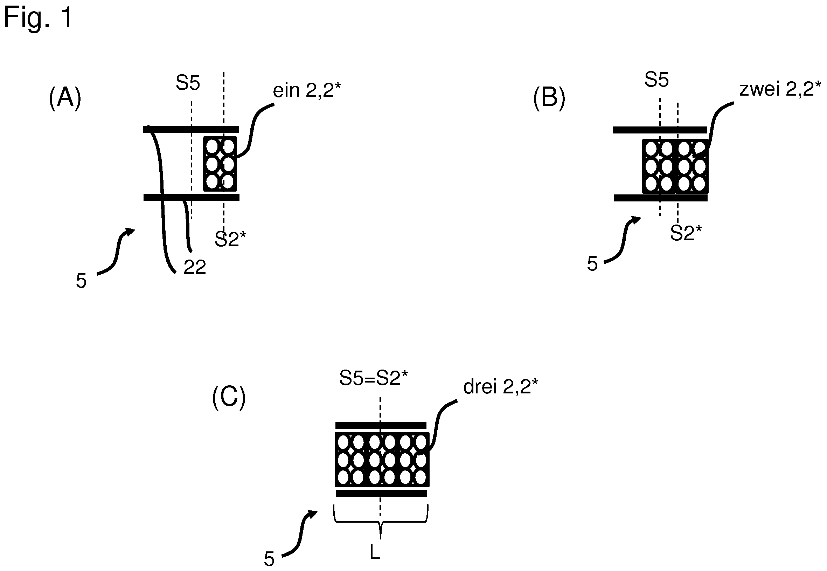

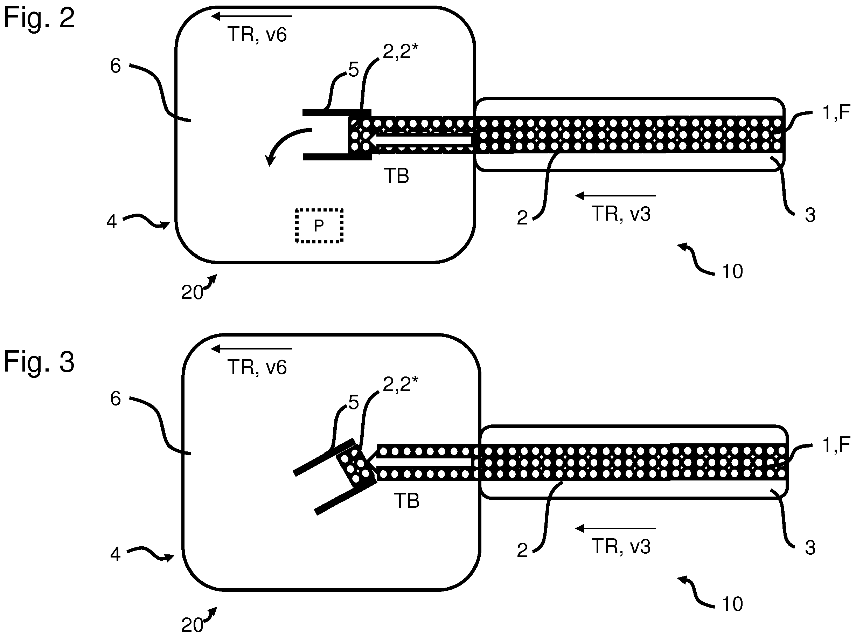

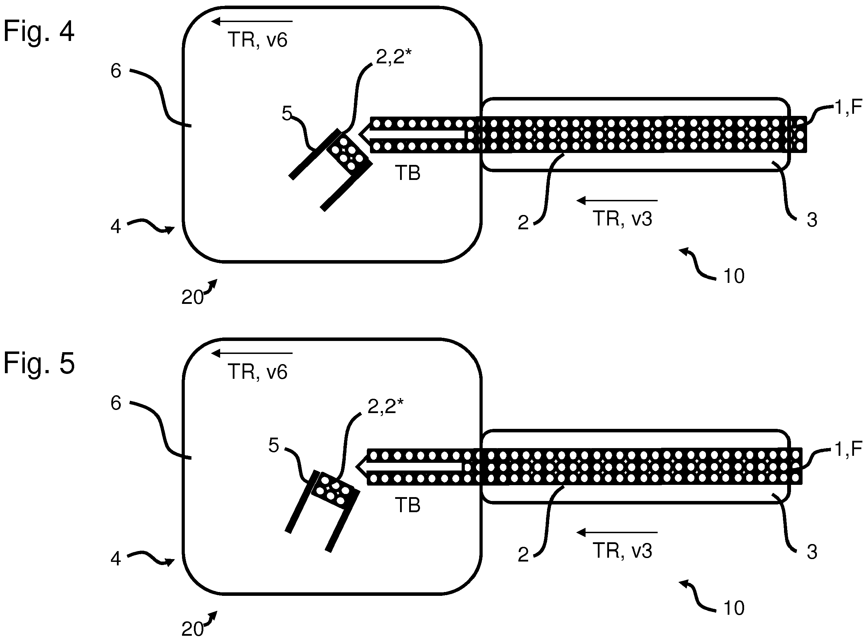

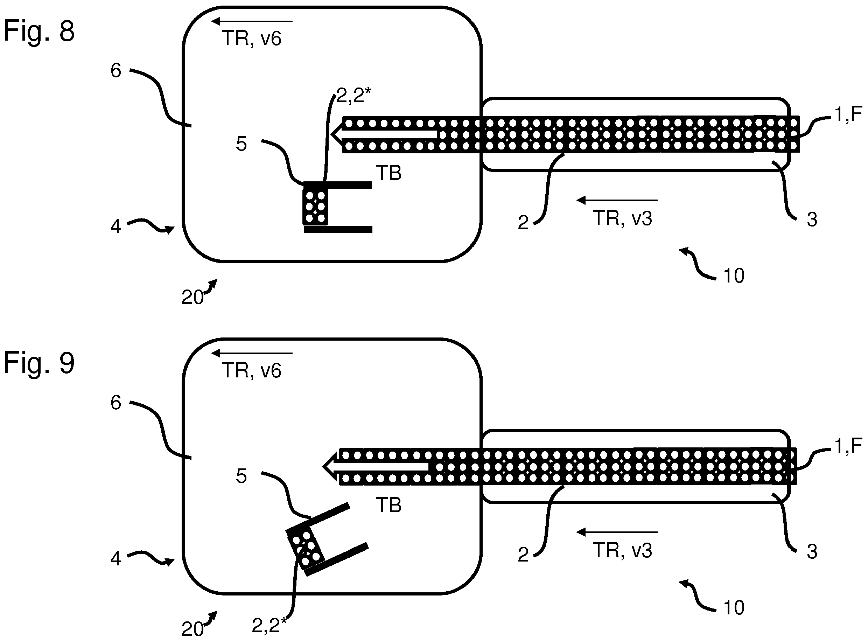

Die Figuren 1A bis 1C zeigen das Erfassen einer unterschiedlichen Anzahl von Stückgütern 2* durch einen Manipulator 5 einer im Zusammenhang mit den Figuren 2 bis 14 näher beschriebenen Handhabungsvorrichtung 10. Der Manipulator 5 besitzt vorzugsweise eine bestimmte Aufnahmekapazität für mehrere Stückgüter 2, 2*. Jedoch ist vorgesehen, dass er in jedem Verfahrensschritt jeweils abgestimmt auf die zu bildende palettierfähige Lage oder Vorgruppierung einer palettierfähigen Lage jeweils eine bestimmte Anzahl von Stückgütern 2 erfasst wird. Dies wird insbesondere über eine Steuereinrichtung (nicht dargestellt) kontrolliert und/oder geregelt. Die Anzahl der erfassten Stückgüter variiert hierbei zwischen eins und der maximalen Anzahl gemäß der Aufnahmekapazität des Manipulators 5. Beispielsweise weist der schematisch dargestellte Manipulator 5 gemäß den Figuren 1 zum klemmenden und/oder formschlüssigen Entgegennehmen von Stückgüter 2, 2* zwei sich gegenüberliegende Klemm- und/oder Greifmittel auf, insbesondere zwei Klemmbacken 22 oder Greiferpaddel oder ähnliches. Die Länge L der Klemmbacken 22 ist derart gewählt, dass eine maximale Anzahl an Stückgütern 2*, welche einen Takt für die Lage bilden, abgegriffen werden können. Der in den Figuren 1 dargestellte Manipulator 5 kann insbesondere ein Stückgut 2* (vergleiche Figur 1A), zwei Stückgüter 2* (vergleiche Figur 1B) oder drei Stückgüter 2* (vergleiche Figur 1C) erfassen.

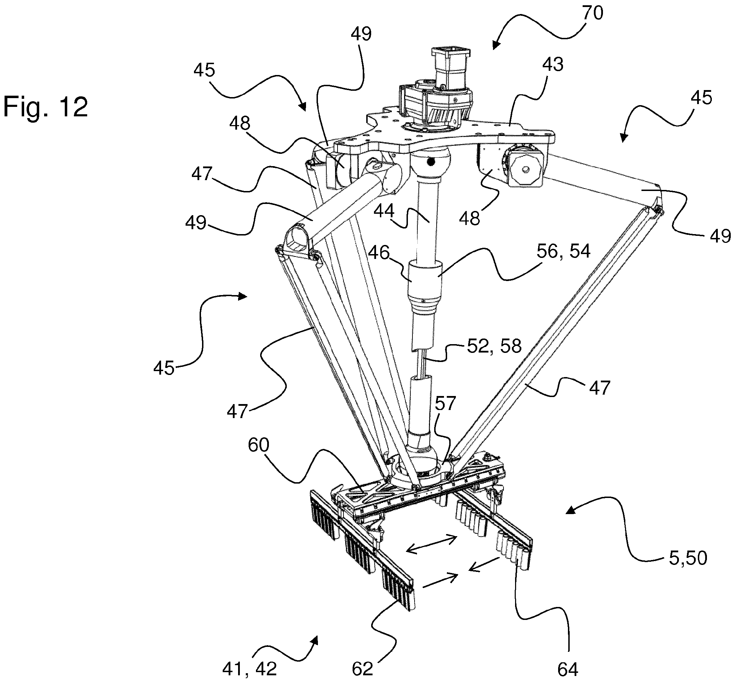

Das hier beschriebene Verfahren dient unter anderem der Kollisionsvermeidung zwischen dem Manipulator 5 mit den in Formation F einlaufenden Stückgütern 2 und/ oder zwischen den vom Manipulator 5 erfassten Stückgütern 2* mit den in Formation F einlaufenden Stückgütern 2. Weiterhin wird eine Minimierung einer von dem Manipulator 5 und den vom Manipulator 5 erfassten Stückgütern 2* zurückzulegenden Wegstrecke bis zur Zielposition und/oder Ausrichtung P erzielt. Auf diese Weise können extreme Auslenkungen des Manipulators 5 vermieden werden, die ansonsten bei einer Positionierung der Stückgüter an die gezeigten Positionen notwendig wären. Handelt es sich bei dem Manipulator 5 beispielsweise um einen Parallelkinematik-Roboter oder Tripoden gemäß Figuren 12 bis 14, so wird durch die Vermeidung von Extremauslenkungen insbesondere das Gestänge desselben geschont und somit dessen Lebensdauer verlängert bzw. Ausfallzeiten wegen Reparaturarbeiten verkürzt.

Der Manipulator 5 kann insbesondere symmetrisch oder asymmetrisch beladen werden. Eine symmetrische Beladung ist insbesondere vorgesehen, wenn der Manipulator 5 die maximale Anzahl an Stückgütern 2, 2* gemäß seiner Aufnahmekapazität erfasst (vergleiche Figur 1C). Erfasst der Manipulator 5 dagegen weniger Stückgüter 2*, so spricht man von einer asymmetrischen Beladung. Hierbei ist vorgesehen, dass eine, durch das wenigstens eine, von den mindestens zwei Klemmbacken 22 des wenigstens einen Manipulators 5 erfasste Stückgut 2* definierte erste vertikale Symmetrieebene S2* beabstandet ist von einer zweiten vertikalen Symmetrieebene S5, die durch den Manipulator 5 bzw. durch dessen Klemmbacken 22 definiert ist. Damit kann insbesondere definiert sein, dass das mindestens eine vom Manipulator 5 erfasste Stückgut 2* dort nicht mittig bzw. symmetrisch zur vertikalen Mittel- und/oder Drehachse des Manipulators 5 bzw. dessen Klemmbacken 22 erfasst und positioniert ist, während es verschoben und/oder in Richtung der Zielposition P gebracht wird, ggf. unter gleichzeitiger Rotation. Dies gilt gleichermaßen für zwei oder mehr erfasste Stückgüter 2*, die ebenfalls außermittig bzw. unsymmetrisch im Manipulator 5 geklemmt sein können.

Die schematischen Figuren 1A und 1B zeigen das unsymmetrische Beladen eines Manipulators 5, der zwischen den Klemmbacken 22 bis zu drei Stückgüter 2* erfassen kann. Wird der Manipulator 5 nur mit einem oder zwei Stückgütern 2 beladen, so erfolgt die Anordnung der Stückgüter 2* außermittig zu den Klemmbacken 22, d.h., die erste vertikale Symmetrieebene S2* ist beabstandet von der zweiten vertikalen Symmetrieebene S5 des Manipulators 5. Wird der Manipulator 5 dagegen vollständig mit drei Stückgütern 2* beladen, dann fallen die erste vertikale Symmetrieebene S2* und die zweite vertikale Symmetrieebene S5 des Manipulators 5 zusammen.

Wenn im vorliegenden Zusammenhang von vertikalen Symmetrieebenen die Rede ist, die sich in erster Linie auf die Positionierungen der Stückgüter 2, 2* bzw. deren Relativpositionen zum Manipulator 5 bzw. zu dessen Klemm- und/oder Greifmitteln beziehen, so sind diese vertikalen Symmetrieebenen definitionsgemäß senkrecht oder ungefähr senkrecht zu einer Horizontalförderebene der Horizontalfördereinrichtung 6 (vgl. Figuren 2 bis 11) orientiert. Sinnvollerweise sind diese Symmetrieebenen, d.h. die erste Symmetrieebene, zweite und ggf. weitere Symmetrieebenen, auch senkrecht zur horizontal verlaufenden Transportrichtung TR und/oder in etwa senkrecht zu einer Längserstreckungsrichtung der geschlossenen Formation F und damit auch jeweils parallel oder zumindest ungefähr parallel zueinander orientiert. Sofern sich der Leser diese Transportrichtung TR als horizontalen Vektorpfeil vergegenwärtigt, der parallel zur horizontalen Auflageebene der Horizontalfördereinrichtung 6 sowie parallel zur normalerweise ebenfalls horizontal oder abschnittsweise horizontal verlaufenden Transporteinrichtung 3 verläuft, so durchstößt dieser Vektorpfeil die senkrecht stehenden Symmetrieebenen ebenfalls im Wesentlichen senkrecht. Die vertikalen Symmetrieebenen im Sinne der vorliegenden Beschreibung stehen damit ungefähr quer zur Bewegungs- bzw. Transportrichtung TR der Stückgüter 2, 2*.

Wie erwähnt, befinden sich diese mindestens zwei Symmetrieebenen - eine bezieht sich auf die Stückgüter 2 bzw. 2*, die andere auf den Manipulator 5 - in einem gewissen Abstand, sofern der Manipulator 5 unsymmetrisch oder einseitig beladen ist. Falls die Symmetrieebenen zusammenfallen oder ungefähr zusammenfallen, liegt der Sonderfall des vollständig beladenen und/oder symmetrisch bzw. mittig beladenen Manipulators 5 vor, wie dies beispielsweise in Figur 1C dargestellt ist.

Rein vorsorglich sei ergänzend erwähnt, dass es sich bei den Stückgütern 2 bzw. 2*, auf die sich die erste vertikale Symmetrieebenen S2* bezieht, um die jeweilige Gesamtheit von Stückgütern 2 und/oder 2* handelt, die sich in dem jeweils betreffenden Arbeitstakt im Manipulator 5 bzw. zwischen dessen beiden Klemmbacken 22 befinden. Diese Gesamtheit der Stückgüter 2 und/oder 2* kann somit ggf. auch durch das Gesamtvolumen und/oder den Masseschwerpunkt der insgesamt im Manipulator 5 erfassten Stückgüter 2 und/oder 2* charakterisiert werden, sofern dies im Einzelfall zweckmäßig ist.

In entsprechender Weise handelt es sich bei der zweiten vertikalen Symmetrieebene S5 des Manipulators 5 sinnvollerweise um diejenige Symmetrieebene, S5, die durch den Mittelpunkt der Gesamtheit an Stückgütern 2 und/oder 2* verläuft, wenn der Manipulator 5 vollständig beladen bzw. entsprechend seiner maximalen Erfassungskapazität beladen ist, was normalerweise auch eine mittige, symmetrische und/oder gleichmäßige Beladung impliziert. Wenn im Zusammenhang der Lokalisierung der zweiten vertikalen Symmetrieebene S5 von einem Mittelpunkt der Gesamtheit an Stückgütern 2 und/oder 2* die Rede ist, so kann dies je nach Ausgestaltung der Stückgüter bspw. der Massenschwerpunkt der Gesamtheit an im Manipulator 5 erfassten Stückgütern 2 und/oder 2* oder auch der volumetrische Mittelpunkt dieser Gesamtheit sein.

Die Figuren 2 bis 11 zeigen schematisch einen zeitlichen Ablauf eines erfindungsgemäßen Verfahrens zum Umgang mit in mindestens einer Reihe 1 hintereinander bewegten Stückgütern 2 durch eine entsprechende Handhabungsvorrichtung 10.

So zeigt die Figur 2 insbesondere das Einlaufen der Stückgüter 2 als Reihe 1 bzw. in im Wesentlichen lückenloser Formation F über die Transporteinrichtung 3 der Handhabungsvorrichtung 10. Bei den Stückgütern 2 handelt es sich im dargestellten Ausführungsbeispiel jeweils um Gebinde aus sechs Getränkebehältern, die beispielsweise mit einer Schrumpfverpackung zusammen gehalten werden.

Die Stückgüter 2 werden in Transportrichtung TR mit einer vorzugsweise konstanten Transportgeschwindigkeit v3 in Richtung eines Erfassungsbereiches 4 eines beweg-, verschieb- und/oder rotierbaren Manipulators 5 der Handhabungsvorrichtung 10 bewegt und insbesondere lückenlos von der Transporteinrichtung 3 an eine Horizontalfördereinrichtung 6 übergeben und auf dieser mit einer konstanten Geschwindigkeit v6 weitergeführt, die insbesondere der Transportgeschwindigkeit v3 der Transporteinrichtung 3 entspricht.

Im Zusammenhang der vorliegenden Beschreibung der Figuren 2 bis 11 ist der Erfassungsbereich 4 lediglich durch einen Pfeil angedeutet, was zeigen soll, dass der dem Bewegungsraum des Manipulators 5 im Bereich der Horizontalfördereinrichtung 2 zugeordnet ist und/oder in etwa mit diesem Bereich bzw. mit diesem Bewegungsraum übereinstimmt.

Die Transporteinrichtung 3 ist beispielsweise ein Förderband oder eine andere geeignete Fördereinrichtung, auf der die Stückgüter 2 vorzugsweise einreihig transportiert werden, wobei zwischen jeweils direkt aufeinander folgenden Stückgütern 2 keine bzw. nur eine geringfügige, gegebenenfalls prozessbedingte, Lücke besteht. Die Stückgüter 2 laufen somit in einer sogenannten geschlossenen Formation F in den Erfassungsbereich 4 des beweg-, verschieb- und/oder rotierbaren Manipulators 5 ein.

Weiterhin ist möglich, dass die Stückgüter 2 mehrreihig, insbesondere in mehreren Parallelreihen zum Erfassungsbereich 4 des Manipulators 5 hin transportiert werden. Die Parallelreihen können dabei beabstandet zueinander oder weitgehend ohne Abstand zueinander auf der Transporteinrichtung 3 transportiert werden.

Weiterhin ist in Figur 2 die Bewegungsbahn TB der in Formation F ankommenden Stückgüter 2 auf der Horizontalfördereinrichtung 6 dargestellt, die sich in einer Flucht zur Bewegungsrichtung der Stückgüter 2 auf der Transporteinrichtung 3 befindet.

Die Horizontalfördereinrichtung 6 und der oberhalb der Horizontalfördereinrichtung 6 angeordnete mindestens eine Manipulator 5 werden zusammen auch als Gruppiermodul 20 der Handhabungsvorrichtung 10 bezeichnet. Der Manipulator 5 ist zum klemmenden und/oder kraft- und/oder formschlüssigen Entgegennehmen von Stückgütern 2, 2* innerhalb des Erfassungsbereichs 4 ausgebildet. Beispielsweise greift der Manipulator 5 in mehreren zeitlich aufeinanderfolgenden Schritten mindestens ein, vorzugsweise mindestens zwei oder drei der nacheinander angeordneten, in geschlossener Formation F einlaufenden Stückgüter 2, 2*, trennt diese von der einreihigen Formation F der Stückgüter 2 ab und überführt das abgetrennte Stückgut 2* bzw. die abgetrennte Gruppe von zwei oder drei lückenlos in Reihe angeordneten Stückgütern 2* in eine Zielposition und/oder Zielausrichtung P.

In den in Figuren 2 bis 11 dargestellten Verfahrensschritten ist insbesondere vorgesehen, dass ein Stückgut 2, 2* durch den Manipulator erfasst und in eine Zielposition P überführt wird. Diese ist in Figur 2 schematisch angedeutet. Das vom Manipulator 5 erfasste Stückgut 2 wird nachfolgend zur Unterscheidung von den in Formation F angeordneten Stückgütern 2 mit dem Bezugszeichen 2* bezeichnet. Hierbei ist vorgesehen, dass das Stückgut 2* in seiner Zielposition P seitlich gegenüber der einlaufenden Formation F an Stückgütern 2 versetzt und beabstandet zu dieser angeordnet ist. Zudem ist im beschriebenen Ausführungsbeispiel vorgesehen, dass das Stückgut 2* in der Zielposition P um 90° verdreht gegenüber seiner ursprünglichen Ausrichtung in der Formation F angeordnet ist.

In den in den Figuren 2 bis 11 dargestellten Verfahrensschritten, die schematisch einen zeitlichen Ablauf eines erfindungsgemäßen Verfahrens zum Umgang mit in mindestens einer Reihe 1 hintereinander bewegten Stückgütern 2 durch eine entsprechende Handhabungsvorrichtung 10 zeigen, wird durch den Manipulator 5 ein Stückgut 2* abgegriffen und in der Zielposition P positioniert. Je nach gewünschter Lagenbildung kann dies bei den unterschiedlichen Verfahrensschritten entsprechend variieren.

Die Figuren 2 bis 11 zeigen den in Transportrichtung TR lückenlos weitergeführten Transport der Reihe 1 bzw. Formation F im Erfassungsbereich 4 der Handhabungsvorrichtung 10, insbesondere auf der Horizontalfördereinrichtung 6 des Gruppiermoduls 20. Insbesondere werden die Stückgüter 2 der Reihe 1 im Erfassungsbereich 4 des Manipulators 5 ohne Unterbrechung und mit unveränderter Geschwindigkeit v6 weitertransportiert.

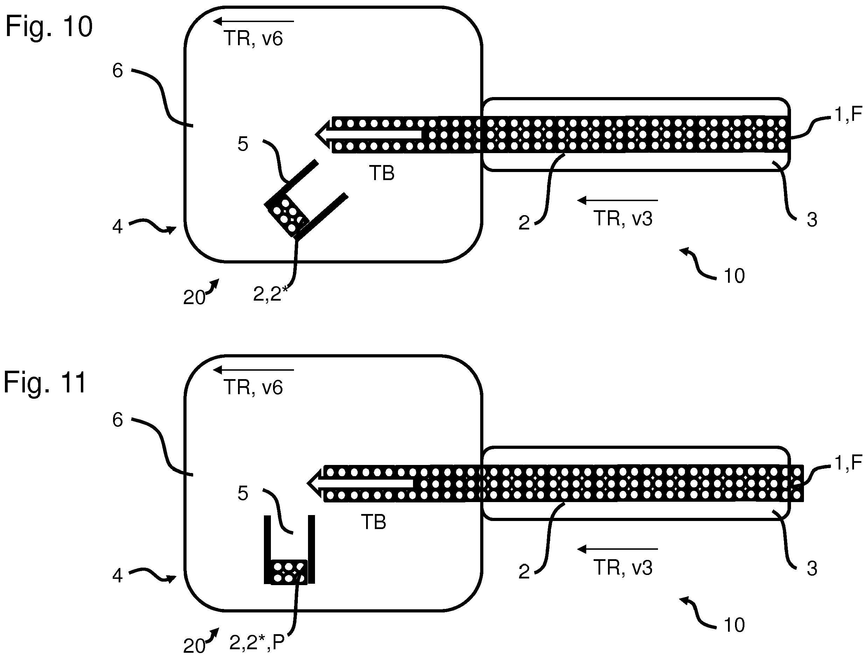

Die Figuren 2 bis 11 beschreiben ein Umsetzen des erfassten Stückgutes 2* durch Wegdrehen vom als Formation F einlaufenden Gebindestrom. Die Entscheidung, ob die Drehung der durch den Manipulator 5 erfassten Stückgüter 2 als eine Linksdrehung oder als eine Rechtsdrehung bei der Positionierung des wenigstens einen Stückguts 2* erfolgt im Sinne einer Kollisionsvermeidung. Insbesondere erfolgt bei einer Zielposition rechts von der Transportbahn TB der einlaufenden Stückgüter 2 eine Rechtsdrehung des Manipulators 5 bzw. Drehung im Uhrzeigersinn. Dagegen erfolgt bei einer in Figuren 2 und 11 dargestellten Zielposition P links von der Transportbahn TB der einlaufenden Stückgüter 2 eine Linksdrehung des Manipulators 5 bzw. Drehung entgegen dem Uhrzeigersinn.

Diese wird zudem im Zuge einer zusätzlichen Wegeverkürzung der Strecke, die der Manipulator 5 zurücklegen muss, mit einer weiteren Drehung des Manipulators 5 um 180° kombiniert, so dass das vom Manipulator 5 erfasste Stückgut 2* insgesamt um 270° gegenüber der Formation F verdreht wird.

Aufgrund des asynchron erfolgenden Abgreifens eines Stückgutes 2, 2* aus der geschlossenen und/oder gegebenenfalls getakteten Formation F der zum Erfassungsbereich 4 geförderten Stückgutreihen 1 können bestimmte sinnvolle Einschränkungen hinsichtlich der dem Abgreifen und Erfassen der Stückgüter 2 aus der Formation F unmittelbar folgenden Bewegungsabläufe des Manipulators 5 definiert werden. Sofern der Greiferkopf des Manipulators 5 in der beschriebenen unsymmetrischen Weise bzw. in sog. asynchroner Bestückung mit Stückgütern 2, 2* beladen ist, womit die Distanzierung der jeweiligen ersten bzw. zweiten Symmetrieebenen - dies sind die jeweiligen vertikalen Symmetrieebenen, die in etwa senkrecht zur Transportrichtung TR bzw. zur Längserstreckungsrichtung der Stückgutformation orientiert sind - gemeint ist, ist bei einer Verschiebung nach links bzw. nach rechts, der ggf. jeweils eine Rotation überlagert sein kann, nicht jede Rotationsrichtungsvariante sinnvoll durchführbar, da dies unter Umständen zu einem unnötig langen Verschiebeweg führen könnte, der vom Manipulator 5 insgesamt auszuführen wäre. Durch Kombination einer 90° Drehung nach der Randbedingung einer Kollisionsvermeidung und einer weiteren 180° Drehung in derselben Drehrichtung nach der Randbedingung einer Wegeverkürzung kann die Auslenkung des Manipulators 5 innerhalb des Erfassungsbereiches 4 minimiert werden. Durch die zusätzliche 180° Drehung des Manipulators 5 muss dieser eine geringere Wegstrecke in Transportrichtung TR zurücklegen, um das erfasste Stückgut 2* in die gewünschte Zielposition P zu verbringen. Dies ist vorteilhaft, da der Manipulator diese Wegstrecke anschließend nicht wieder in der Gegenrichtung zurücklegen muss, um weitere Stückgüter 2 aus der einlaufenden Formation F abzugreifen.

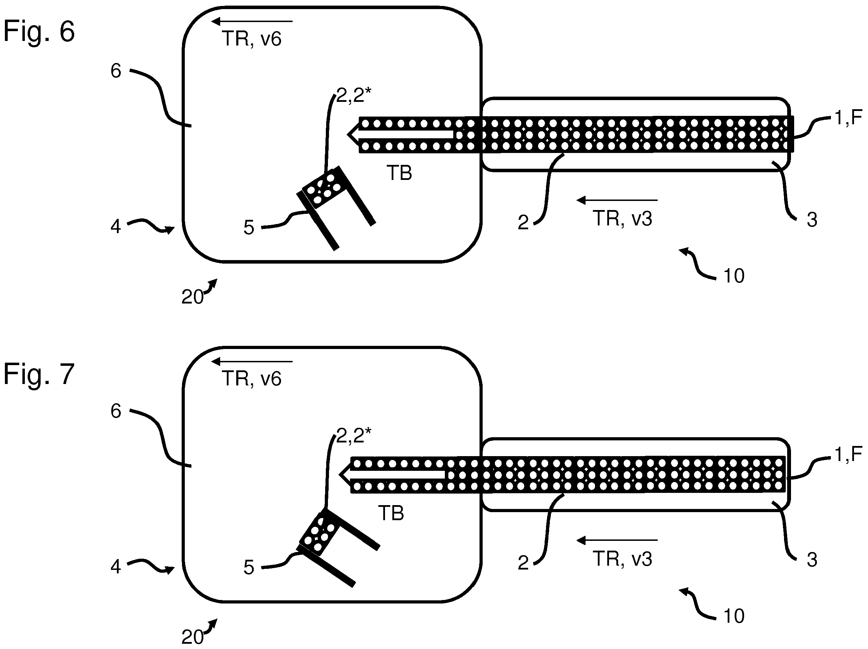

Wie es die Figuren 2 bis 11 veranschaulichen, ist der vom Manipulator 5 bei der Positionierung des erfassten Stückgutes 2* und seiner Verbringung in die Zielposition P zurückzulegende Weg zumindest geringfügig kürzer als bei einer bloßen 90°-Drehung. Hierbei könnte zwar eine Rotationsbewegung um insgesamt 180° eingespart werden, doch ist das im hinteren Bereich des Manipulators 5 befindliche Stückgut 2* weiter von seiner Zielposition P entfernt als wenn der Manipulator 5 gemäß Figuren 6 bis 11 nach einer 90°-Drehung um weitere 180° gedreht wird. Durch diese weitere 180°-Drehung kann somit ein Teil der ansonsten unverzichtbaren Auslenkung des Manipulatorgestänges (vgl. Figuren 12 bis 14) eingespart werden, was insbesondere bei der Verwendung von Parallelkinematik-Robotern dazu beitragen kann, dass dieser in einem optimalen Bewegungsbereich verbleibt, bei dem keine extremen Gestängeauslenkungen notwendig sind. Der Verzicht auf extreme Gestängeauslenkungen kann nicht nur die Positionierungsgeschwindigkeiten erhöhen, sondern führt auch zu reduziertem Verschleiß bei den Antrieben für die Stellarme des Parallelkinematik-Roboters.

Bei den gezeigten Positionierungsphasen kann wahlweise vorgesehen sein, dass der Manipulator 5 das erfasste Stückgut 2* beispielsweise anhebt, zur Zielposition P befördert und auf der Horizontalfördereinrichtung 6 innerhalb des Erfassungsbereiches 4 wieder absetzt. Alternativ kann vorgesehen sein, dass der Manipulator 5 das erfasste Stückgut 2* auf der Horizontalfördereinrichtung 6 verschiebt, indem er insbesondere eine Geschwindigkeitskomponente und/oder eine Richtungskomponente auf das erfasste Stückgut 2* aufbringt.

Vorzugsweise wird das erfasste Stückgut 2* hierbei in einem einzigen, insbesondere unterbrechungsfreien, Manipulationsschritt in die Zielposition und/oder - ausrichtung P überführt, geschoben und dabei entsprechend gedreht. Insbesondere wird das erfasste Stückgut 2* in eine Zielposition und/oder -ausrichtung P gebracht, so dass die in mehreren zeitlich aufeinander folgenden Verfahrensschritten manipulierten und in jeweilige Zielpositionen gebrachten Stückgüter 2* eine palettierfähige Lage oder eine Vorgruppierung für eine palettierfähige Lage bilden.

Bei den hier beschriebenen Manipulationsschritten ist insbesondere vorgesehen, dass sich der Manipulator 5 zumindest beim Erfassen des Stückgutes 2* und bei dessen Freigabe in der Zielposition und Zielausrichtung P mit einer Geschwindigkeit bewegt, die annähernd bzw. exakt der Transportgeschwindigkeit v3 entspricht, mit der sich die geschlossene Formation F der Stückgüter 2 bewegt bzw. die der Geschwindigkeit v6 entspricht, mit der sich die Horizontalfördereinrichtung 6 bewegt.

Nachdem das Stückgut 2 seine Zielposition P erreicht hat und sich der Manipulator 5 von diesem gelöst hat, wird das Stückgut 2* in Transportrichtung TR und in Geschwindigkeit v6 auf der Horizontalfördereinrichtung 6 weiterbewegt. Die jeweilige Zielposition P ist insbesondere eine Relativposition zu den nachfolgenden, nicht vom Manipulator 5 in ihrer Position veränderten Stückgütern 2. Da bei der hier beschriebenen Ausführungsform die Geschwindigkeit v6 der Horizontalfördereinrichtung 6 der Transportgeschwindigkeit v3 der Transporteinrichtung 3 entspricht und da die Transportrichtung TR der Transporteinrichtung 3 und der Horizontalfördereinrichtung 6 ebenfalls korrespondieren, werden die durch den Manipulator 5 in ihrer Position und/oder Ausrichtung veränderten Stückgüter 2* bei und/oder unmittelbar nach Erreichen ihrer Zielposition P ohne Unterbrechung und/oder Geschwindigkeits- und/oder Richtungsänderung weitertransportiert.

Bei dem dargestellten Ausführungsbeispiel wird in dem dargestellten Verfahrensschritt ein Stückgut 2 der Formation F durch den Manipulator 5 erfasst und in eine Zielposition P überführt, wobei das erfasste Stückgut 2* insgesamt um 270° gedreht wird. Für den Fachmann ist insbesondere im Zusammenhang mit der Offenbarung der Figuren 1 klar, dass je nach Ausbildung des Manipulators 5 und Anordnung des Manipulators 5 an der einlaufenden geschlossenen Formation F auch in den verschiedenen Verfahrensschritten jeweils unterschiedliche Mengen an Stückgütern 2, 2* erfasst werden können.

Die Kombination von Horizontalfördereinrichtung 6 und der mindestens eine über der Horizontalfördereinrichtung 6 angeordnete Manipulator 5 bilden ein sogenanntes Gruppiermodul 20. Stückgüter 2, beispielsweise Gebinde aus Getränkebehältern, werden auf mindestens einer Transporteinrichtung 3 bevorzugt mit konstanter Geschwindigkeit v3 dem Gruppiermodul 20 zugeführt. Die Stückgüter werden insbesondere lückenlos von der mindestens einen Transporteinrichtung 3 in das Gruppiermodul 20 überführt und durch die Horizontalfördereinrichtung 6 konstant weiter bewegt. Der Manipulator 5, welcher oberhalb der Horizontalfördereinrichtung 6 im Gruppiermodul 20 angeordnet ist, ergreift abwechselnd eine vorgegebene Anzahl von Stückgütern 2, 2* und positioniert diese auf jeweiligen Zielpositionen. Während der Positionierung der vom Manipulator 5 erfassten Stückgüter 2* werden die mindestens eine Transporteinrichtung 3 und die Horizontalfördereinrichtung 6 weiterhin konstant betrieben. Insbesondere werden die Stückgüter 2 der Formation F, sowie die bereits in der Zielposition P angeordneten Stückgüter 2* unterbrechungsfrei und/oder mit unveränderter Transportgeschwindigkeit v3, v6 auf den Transporteinrichtung 3 bzw. der Horizontalfördereinrichtung 6 weiter transportiert.

Die Geschwindigkeit v3, v6 ist dabei so gewählt, dass der Manipulator 5 innerhalb des ihm zur Verfügung stehenden Arbeitsbereichs ausreichend Zeit hat, um die Stückgüter 2* zu verschieben. Bevorzugt besteht der Manipulator 5 aus einem Deltakinematik Roboter, um hoch dynamische Verschiebebewegungen der wenigstens zwei zeitlich aufeinanderfolgenden Schritte zu realisieren und möglichst schnelle Taktzeiten zu ermöglichen.

Ein Vorteil der hier beschriebenen Handhabungsvorrichtung 10 und des entsprechenden Verfahrens liegen insbesondere darin, dass die durch den Manipulator 5 aufgebrachte Drehrichtung, um die erfassten Stückgüter 2* entsprechend ihrer Zielausrichtung an der Zielposition P auszurichten, jeweils in Abhängigkeit von der Zielposition P relativ zur Transporteinrichtung 3 gewählt wird. Sollen die erfassten Stückgüter 2* rechts zu Transporteinrichtung 3 verbracht werden, so führt der Manipulator 5 zusammen mit den erfassten Stückgütern 2* eine Rechtsdrehung aus. Sollen die erfassten Stückgüter 2* dagegen links zu Transporteinrichtung 3 verbracht werden, so führt der Manipulator 5 zusammen mit den erfassten Stückgütern 2* eine Linksdrehung aus. Dadurch kann besonders vorteilhaft eine Kollision mit bereits in einer Zielposition P angeordneten Stückgütern 2* und/oder eine Kollision mit den nachfolgenden Stückgütern 2 der Formation F vermieden werden. Zudem kann gegebenenfalls eine Verkürzung der Wegstrecken, die der Manipulator 5 mit den erfassten Stückgütern 2* vornehmen muss, erzielt werden.

Eine Wegeverkürzung kann insbesondere dadurch realisiert werden, dass der Manipulator 5 das erfasste Stückgut 2* um weitere 180° überdreht, so dass dieses gegenüber seiner ursprünglichen Ausrichtung in der Formation F nach Beendigung des Manipulationsschrittes um 270° verdreht auf der Horizontalfördereinrichtung 6 angeordnet ist.

Vor dem Einleiten der Drehung des Manipulators 5 kann dieser beispielsweise zusammen mit dem erfassten Stückgut 2* / den erfassten Stückgütern 2* zumindest kurzfristig gegenüber den Stückgütern 2 der Formation F beschleunigt werden (nicht dargestellt), um die vom Manipulator 5 erfassten Stückgüter 2* zumindest geringfügig von den nachfolgenden Stückgütern 2 der Formation F abzutrennen. Diese Beschleunigung der erfassten Stückgütern 2* gegenüber der Formation F kann vorteilhaft sein, ist zur Vermeidung der Kollision zwischen den erfassten Stückgütern 2* und der Formation F jedoch in der Regel nicht zwingend notwendig.

Bei dem hier beschriebenen Verfahren werden die Gruppen an Stückgütern 2* gemäß der jeweils zu bildenden Anordnung während des Gruppier- / Positionierprozesses zusammengestellt bzw. gebildet. Insbesondere ist die Gruppenbildung und Positionierung im Rahmen eines einzigen Verfahrensschrittes und vermittels einer einzigen entsprechenden Vorrichtung (insbesondere der beweg-, verschieb- und/oder rotierbare Manipulator 5 als Teil der Vorrichtung) möglich. Dies stellt einen wesentlichen Unterschied zum Stand der Technik dar, bei dem beispielsweise durch die Anordnung geeigneter Fördermittel, die mit jeweils unterschiedlichen Geschwindigkeiten angetrieben werden, erst eine Gruppenbildung erfolgt, die anschließend in einem weiteren Verfahrensschritt entsprechend der zu bildenden Lage positioniert und/oder gedreht werden.

Wenn im vorliegenden Fall bzw. generell im Zusammenhang der vorliegenden Erfindung generalisierend von einem Manipulator 5 die Rede ist, kann es sich konkret bei dem zur Überführung des mindestens einen Stückgutes 2, 2*, 2a in die Zielposition P, Pa und/oder Zielausrichtung vorgesehenen Teil des Manipulators 5 beispielsweise um einen Werkzeugkopf, einen Greiferkopf o.dgl. handeln, der bspw. an beweglich gelagerten Auslegerarmen gehaltert und gelagert ist, welche Auslegerarme wiederum typischerweise an einem Gestell oder Rahmen o. dgl. gestellfest gelagert sein können. Eine solche - auch als Parallelkinematik-Anordnung bekannte - Manipulatoraufhängung bzw. Manipulatoranordnung ermöglicht die gewünschte Beweglichkeit des Kopfes (auch: des Manipulators), der die Stückgüter 2, 2*, 2a in der gewünschten Weise erfassen, verschieben, positionieren, platzieren, drehen etc. kann, um die jeweiligen Zielpositionen P, Pa und/oder Zielausrichtungen für die Stückgüter 2, 2*, 2a anfahren zu können. Ebenso denkbar sind jedoch auch andere geeignete Manipulatorkonfigurationen, bspw. solche mit Portalroboter-Führungen oder ähnlichem. Diese anderen Manipulatorkonfigurationen können sich wahlweise auf einzelne, mehrere oder alle Ausführungsvarianten beziehen, die im Zusammenhang der vorliegenden Figurenbeschreibung und/oder der gesamten Erfindungsbeschreibung erwähnt sind.

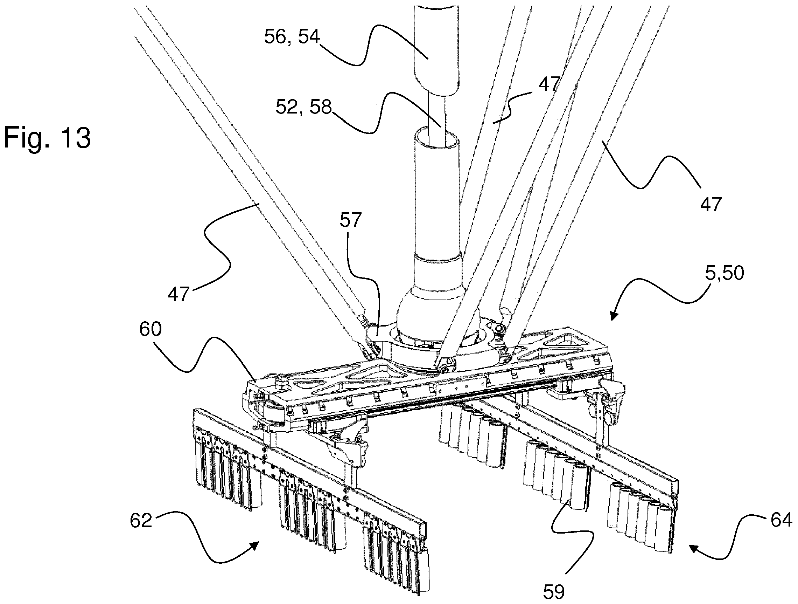

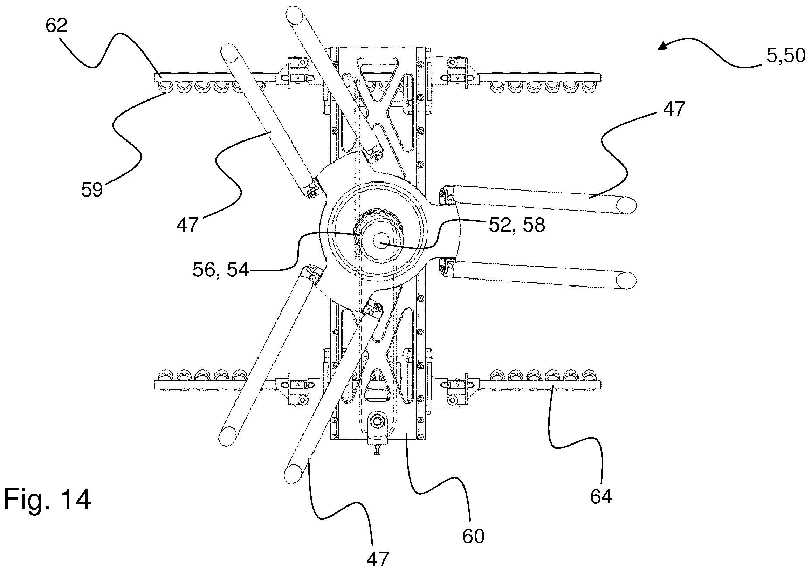

Die Figuren 12 bis 14 zeigen verschiedene Ansichten einer Ausführungsform eines Manipulators 5, 50 einer Handhabungsvorrichtung 10 und/oder Manipulationsvorrichtung (gemäß einer der voranstehenden Figuren) zur Durchführung einer Variante oder mehrerer Varianten des erfindungsgemäßen Verfahrens, insbesondere zeigt Figur 12 eine schematische Perspektivansicht; Figur 13 zeigt eine schematische Detailansicht eines unteren Teils der Vorrichtung aus Figur 12 und Figur 14 zeigt eine schematische Querschnittsdarstellung durch die Vorrichtung aus dem Ausführungsbeispiel gemäß Figur 12 und Figur 13.

Einleitend sei an dieser Stelle darauf hingewiesen, dass die in den Figuren 12 bis 14 erläuterten Ausführungsvarianten der Vorrichtung zur Durchführung zumindest einiger Varianten des erfindungsgemäßen Verfahrens sich auf einen Deltaroboter, einen sog. Tripod bzw. auf einen Deltakinematik-Roboter mit drei gleichartigen Schwenkarmen beziehen, der einen Teil einer Handhabungseinrichtung bzw. eines Manipulators zur Handhabung, zum Drehen, Verschieben oder Aufnehmen von Artikeln, Stückgütern oder Gebinden bilden oder diese Handhabungseinrichtung bzw. diesen Manipulator enthalten kann. Hinsichtlich einer möglichen Ausgestaltung des Deltaroboters bzw. Tripods, seines Aufbaus, seiner Funktionsweise und seines Bewegungsraumes sei insbesondere auf den Offenbarungsgehalt der DE 10 2013 106 004 A1 verwiesen, auf deren gesamten Inhalt hiermit ausdrücklich Bezug genommen wird. Auf eine detaillierte Beschreibung der Bewegungsmodi, der Antriebe für die drei Schwenkarme etc. soll deshalb an dieser Stelle verzichtet werden. Grundsätzlich könnte die Vorrichtung 41 gemäß Figur 12 bis Figur 14 auch vier gleichartige Stellarme aufweisen.

Im Folgenden ist der die Vorrichtung 41 bildende bzw. diese Vorrichtung 41 enthaltende Roboter, der gleichzeitig die Handhabungseinrichtung bzw. den Manipulator enthalt, umfasst bzw. davon einen Teil bilden kann, allgemein mit der Bezugsziffer 42 bezeichnet. Es sei darauf hingewiesen, dass der mit der Bezugsziffer 42 bezeichnete Roboter auch als Deltaroboter 42, als Deltakinematik-Roboter 42, als Parallelkinematik-Roboter 42 oder auch als Tripod 42 (vgl. hierzu Figur 12) bezeichnet sein kann.

Die Figur 12 zeigt eine schematische Perspektivansicht einer Ausführungsform einer Vorrichtung 41 bzw. des Deltakinematik-Roboters 42 zur Durchführung des erfindungsgemäßen Verfahrens. Die Vorrichtung 41 bzw. der Deltakinematik-Roboter 42 ist bspw. ausgebildet zum Greifen, Drehen und Versetzen zu Gebinden zusammengefasster Getränkebehältnisse, die in Figur 12 nicht mit dargestellt sind. Die Vorrichtung 41 bzw. der Deltakinematik-Roboter 42 kann jedoch ebenso auch zum Greifen, Drehen und Versetzen von beliebigen Artikeln oder Stückgütern eingesetzt werden.

Wie in Figur 12 zu erkennen, besitzt die Vorrichtung 41 bzw. der Deltakinematik-Roboter 42 eine obere Aufhängung 43. An der oberen Aufhängung 43 sind drei Stellarme 45 über einen jeweils zugeordneten Antrieb 48 drehbar befestigt. Die drehende Bewegung der Stellarme 45 erfolgt hierbei derart, dass ihre Drehachsen parallel zueinander verlaufen. Weiter bestehen die drei Stellarme 45 aus wenigstens zwei relativ zueinander schwenkbaren Armabschnitten 47 und 49, wobei die unteren Armabschnitte 47 bzw. Unterarme 47 jeweils aus zwei parallel zueinander orientierten Gestängen gebildet sind. Der jeweilige obere Armabschnitt 49 bzw. Oberarm 49 steht mit seinem jeweils zugeordneten Antrieb 48 in Verbindung bzw. ist an seinem jeweils zugeordneten Antrieb 48 angeflanscht. Zudem können die drei Stellarme 45 unabhängig voneinander bewegt werden. Sämtliche Antriebe 48 stehen hierzu mit einer Steuerungseinheit in Verbindung, welche die Bewegung der Stellarme 45 vorgibt und die Antriebe 48 ansteuert.

Am unteren Ende der drei Stellarme 45 steht ein Manipulator 50 mit den drei Stellarmen 45 derart in Verbindung, dass der Manipulator 50 über eine Bewegung der drei Stellarme 45 zur Handhabung von Artikeln verfahren werden kann. Die in Figur 12 nicht dargestellte Steuerungseinheit gibt daher die Bewegung der Stellarme 45 in Abhängigkeit einer für den Manipulator 50 vorgesehenen Position zum Greifen und Handhaben von Artikeln vor. Sämtliche der drei Stellarme 45 sind über einen Tragring 57 mit einer Basis 60 des Manipulators 50 mechanisch gekoppelt. Die mechanische Verbindung bzw. Koppelung zwischen dem Tragring 57 und der Basis 60 des Manipulators 50 ist derart, dass diese eine relative Verdrehung des Manipulators 50 gegenüber dem Tragring 57 erlaubt. Der Tragring 57 kann auch als Tool-Center-Point der Vorrichtung 41 bezeichnet werden.

In etwa mittig ist der Manipulator 50 an eine Linearführung 56 drehfest angeflanscht, wobei die Linearführung 56 als erste Welle 54 ausgebildet ist und somit der Manipulator 50 über die erste Welle 54 gedreht werden kann.

Weiter ist eine als zweite Welle 58 ausgebildete Betätigungseinrichtung 52 vorgesehen, mittels welcher Klemmbacken 62 und 64 zum Schließen und Öffnen angesteuert werden können. Die Drehachsen der ersten Welle 54 sowie der als zweite Welle 58 ausgebildeten Betätigungseinrichtung 52 sind identisch. Die erste Welle 54 und die zweite Welle 58 sind koaxial zueinander orientiert bzw. angeordnet. Da über die als zweite Welle 58 ausgebildete Betätigungseinrichtung 52 der Manipulator 50 bzw. die sich gegenüberliegenden Klemmbacken 62 und 64 des Manipulators 50 angesteuert werden können, sind keine pneumatischen, hydraulischen oder elektrischen Leitungsverbindungen notwendig, die zur Ansteuerung des Manipulators 50 bzw. der Klemmbacken 62 und 64 mit dem Manipulator 50 in Verbindung stehen.

Vorteilhafterweise besteht hierbei die Möglichkeit, den Manipulator 50 zusammen mit seinen Klemmbacken 62 und 64 über die erste Welle 54 um mehr als 360° zu drehen, da keine Leitungsverbindungen eine vollständige Umdrehung behindern. Hierdurch kann gegenüber aus dem Stand der Technik bekannten Vorrichtungen der Durchsatz bei Handhabung von Artikeln deutlich verbessert werden, da der Manipulator 50 nicht zurückgedreht werden muss, um diesen in eine Ausgangsorientierung zu überführen.

Wie soeben erwähnt, können bei der in Figur 12 gezeigten Ausführungsform die beiden Klemmbacken 62 und 64 durch eine Rotation der als zweite Welle 58 ausgebildeten Betätigungseinrichtung 52 relativ zueinander verstellt werden bzw. aufeinander zu bewegt und voneinander weg bewegt werden. Die jeweilige Bewegung der Klemmbacken 62 und 64 bei Ansteuerung über die als zweite Welle 58 ausgebildete Betätigungseinrichtung 52 ist vorliegend mittels Pfeildarstellung verdeutlicht. Beide Klemmbacken 62 und 64 sind an der Basis 60 des Manipulators 50 hängend und linear beweglich befestigt. Eine Ansteuerung der Klemmbacken 62 und 64 erfolgt über mit der zweiten Welle 58 in Verbindung stehende Übersetzungsstufen eines Getriebes, die in Figur 12 nicht zu erkennen sind und ein Drehmoment der zweiten Welle 58 auf eine Stellbewegung der Klemmbacken 62 und 64 übertragen.

Die Linearführung 56 bzw. die erste Welle 54 umfasst zwei Gehäuseteile 44 und 46, die miteinander teleskopierbar in Verbindung stehen und jeweils einen Hohlraum zur Aufnahme der als zweite Welle 58 ausgebildeten Betätigungseinrichtung 52 bereitstellen. Uber ein kardanisch wirkendes Gelenk ist die als zweite Welle 58 ausgebildete Betätigungseinrichtung 52 an den Manipulator 50 und an einen Aktor 70 gekoppelt.

Der Aktor 70 sitzt drehfest auf der oberen Aufhängung 43 auf. Über den Aktor 70 kann das als zweite Welle 58 ausgebildete Betätigungsglied 52 drehend bewegt werden, womit die Klemmbacken 62 und 64 des Manipulators 50 zum Greifen oder Freigeben von Artikeln verfahren werden.

Gemäß dem Verfahren muss die zweite Welle 58, welche zum Schließen und Öffnen der Klemmbacken 62 und 64 des Manipulators 50 bzw. des Greifers dient, bei einer Drehung des Greifers oder Manipulators 50 durch Betätigung der ersten Welle 54 eine Ausgleichsbewegung durchführen. Diese Ausgleichsbewegung erfolgt als Relativbewegung gegenüber der ersten Welle 54 im Gleichlauf, im Gegenlauf oder synchron. Die Richtung der Ausgleichsbewegung hat je nach gewünschter Funktion zu erfolgen. Werden z.B. die Klemmbacken 62 und 64 durch eine Drehbewegung der zweiten Welle 58 entgegen dem Uhrzeigersinn geschlossen und der Manipulator 50 bzw. der Greifer gleichzeitig durch Drehung der ersten Welle 54 entgegen dem Uhrzeigersinn gedreht, so muss die zweite Welle 58 bei der Drehung des Manipulators 50 ebenfalls eine Drehung entgegen dem Uhrzeigersinn durchführen, um zu verhindern, dass sich die Klemmbacken 62 und 64 öffnen. Analog dazu ist eine Drehung im Uhrzeigersinn umzusetzen. Die erforderlichen Drehrichtungen der Wellen 54 und 58 sind abhängig von der technischen Ausführung der Umsetzung der Drehbewegung der zweiten Welle 58 in eine Linearbewegung der Klemmbacken 62 und 64.

Die schematische Detailansicht der Figur 13 verdeutlicht einen unteren Teil der Vorrichtung 41 bzw. des Deltakinematik-Roboters 42 aus Figur 12 und zeigt hierbei insbesondere nochmals im Detail eine Ausführungsform des Manipulators 50, wie er für das erfindungsgemäße Verfahren und insbesondere zur Durchführung des erfindungsgemäßen Verfahrens vorgesehen sein und eingesetzt werden kann.

Die Klemmbacken 62 und 64 besitzen zum Greifen von Artikeln auf ihrer der jeweiligen gegenüberliegenden Klemmbacke 62 bzw. 64 zugewandten Seite mehrere biegeweiche Kontaktelemente 59. Die biegeweichen Kontaktelemente 59 werden bei einer Zustellbewegung der Klemmbacken 62 und 64 mit den jeweiligen Artikeln kraftbeaufschlagt in Anlage gebracht und setzen die jeweiligen Artikel im Wesentlichen unbeweglich am Manipulator 50 fest.

Auch zeigt die Figur 13 nochmals im Detail die unteren Armabschnitte 47 der Stellarme 45 (vgl. Figur 12), welche jeweils als Gestängekonstruktion ausgebildet sind und an ihrem unteren Ende mit dem Tragring 57 (bzw. dem sog. Tool-Center-Point) jeweils gelenkig in Verbindung stehen. Wie vorhergehend bereits erwähnt, kann der Manipulator 50 über die erste bzw. die äußere Welle 54 relativ zum Tragring 57 gedreht werden.

Die schematische Querschnittsdarstellung der Figur 14 lässt weitere Details der Vorrichtung 41 bzw. des Deltakinematik-Roboters 42 aus dem Ausführungsbeispiel gemäß Figuren 12 und 13 erkennen. In Figur 14 sind nochmals das als zweite Welle 58 ausgebildete Betätigungsglied 52 sowie die als erste Welle 54 ausgebildete Linearführung 56 zu erkennen. Die zweite Welle 58 und die erste Welle 54 besitzen eine konzentrische Orientierung und eine identische Drehachse, d.h. sie sind koaxial zueinander angeordnet. Eine Drehung des Manipulators 50 kann durch die als erste Welle 54 ausgebildete Linearführung 56 bewirkt werden, wobei die Drehachse in Figur 14 vertikal bzw. in Richtung der Bildebene orientiert ist.

Wie bereits erwähnt, sind bei Drehbewegungen des Manipulators 50, die durch Drehungen der äußeren ersten Welle 54 induziert werden, gleichsinnige oder gegensinnige Ausgleichsbewegungen der inneren zweiten Welle 58 erforderlich, um nicht eine unerwünschte Betätigung der Klemmbacken 62 und 64, d.h. deren Öffnen oder weitergehendes Schließen auszulösen. Der Umfang dieser Ausgleichsbewegung richtet sich einerseits nach der kinematischen Verknüpfung der Stellantriebe, die durch die zweite Welle 58 betätigt werden, so z.B. nach der Übersetzung dieser Stellantriebe. So können je nach Übersetzung unterschiedliche Drehwinkel der Ausgleichsbewegung erforderlich sein. Zudem richtet sich die Ausgleichsbewegung nach der Drehrichtung der ersten Welle 54, welche je nach Bedarf eine gegensinnige oder gleichsinnige Ausgleichsbewegung der zweiten Welle 58 erfordert, sollen bei der Drehung des Manipulators 50 die Klemmbacken 62 und 64 unverändert geschlossen oder geöffnet bleiben.

Ergänzend sei erwähnt, dass die Wirkverbindungen der jeweiligen Wellen 54 und 58 mit dem Manipulator 50 bzw. für die Ausgleichs- und/oder Stellbewegungen für die Klemmbacken 62 und 64 auch vertauscht werden können, sofern die entsprechenden mechanischen Voraussetzungen hierfür in den Koppelbereichen innerhalb des Tragrings 57 gegeben sind. So kann die äußere erste Welle 54 wahlweise auch die Klemmbacken 62 und 64 betätigen, d.h. öffnen und schließen, während die innere weitere Welle 58 durchaus auch für die Drehbewegungen des Manipulators 50 bzw. der rotierbaren Abschnitt der Vorrichtung 41 bzw. des Deltakinematik-Roboters 42 zuständig sein bzw. eingesetzt werden kann.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezuqszeichenliste

- 1: Reihe
- 2,2*: Stückgut
- 3: Transporteinrichtung
- 4: Erfassungsbereich
- 5: Manipulator
- 6: Horizontalfördereinrichtung
- 10: Handhabungsvorrichtung
- 20: Gruppiermodul
- 22: Klemm- und/oder Greifmittel; Klemmbacken
- 41: Vorrichtung
- 42: Roboter, Deltaroboter, Deltakinematik-Roboter, Parallelkinematik-Roboter, Tripod
- 43: Aufhängung, obere Aufhängung
- 44: erstes Gehäuseteil
- 45: Stellarm
- 46: zweites Gehäuseteil
- 47: unterer Armabschnitt, Unterarm
- 48: Antrieb
- 49: oberer Armabschnitt, Oberarm
- 50: Manipulator
- 52: Betätigungsglied, Betätigungseinrichtung
- 54: Welle, erste Welle, äußere Welle, äußere erste Welle
- 56: Linearführung
- 57: Tragring
- 58: Welle, weitere Welle, zweite Welle, innere zweite Welle
- 59: Kontaktelement
- 60: Basis
- 62: Klemmbacke
- 64: Klemmbacke
- 70: Aktor

- F: Formation
- P: Zielposition
- S2*, S5: Symmetrieebene
- TB: Bewegungsbahn
- TR: Transportrichtung
- v3: Transportgeschwindigkeit
- v6: Geschwindigkeit

## Patentansprüche

1. Verfahren zum Umgang mit hintereinander bewegten Stückgütern (2), die zu einem Erfassungsbereich (4) wenigstens eines Manipulators (5) transportiert werden, wobei
- im Erfassungsbereich (4) ein transportiertes Stückgut (2) oder eine Gruppe umfassend wenigstens zwei transportierte Stückgüter (2) mittels Klemm- und/oder Greifmitteln (22) des wenigstens einen Manipulators (5) erfasst, von nachfolgenden Stückgütern (2) räumlich abgetrennt und mittels einer Rotationsbewegung des Manipulators (5) in eine definierte relative Zielposition (P) und Zielausrichtung gegenüber den jeweils nachfolgenden Stückgütern (2) gebracht wird, **dadurch gekennzeichnet, dass**
- eine, durch das eine, erfasste Stückgut (2) oder die erfasste Gruppe definierte erste vertikale und in etwa senkrecht zu einer Transportrichtung (TR) der Stückgüter (2) orientierte Symmetrieebene beabstandet ist von einer hierzu in etwa parallel ausgerichteten zweiten vertikalen Symmetrieebene, die durch den Manipulator (5) bzw. durch dessen Klemm- und/oder Greifmittel (22) definiert ist, und
- wobei in mindestens einem Schritt von mehreren zeitlich aufeinanderfolgenden Schritten jeweils ein transportiertes Stückgut (2) oder eine Gruppe erfasst und durch eine Rotation des Manipulators (5) bzw. seiner Klemm- und/oder Greifmittel (22) um eine vertikale Achse mit einem Rotationswinkel von etwa 270° von einer geradlinigen Bewegungsbahn in ursprünglicher Transportrichtung (TR) jeweils räumlich abgetrennt und in eine jeweilige definierte relative Zielposition (P) und Zielausrichtung gegenüber nachfolgenden Stückgütern (2) gebracht wird,
- woraus resultierend aus den in zeitlich aufeinanderfolgenden Schritten in ihre jeweilige Zielposition (P) und Zielausrichtung gebrachten und gedrehten Stückgütern (2) eine palettierfähige Lage oder eine Vorgruppierung für eine palettierfähige Lage gebildet wird.

2. Verfahren nach Anspruch 1, bei dem zum Bilden der palettierfähigen Lage oder der Vorgruppierung für eine palettierfähige Lage das jeweils wenigstens eine vom wenigstens einen Manipulator (5) erfasste Stückgut (2) durch seitliche Rotation jeweils räumlich von nachfolgenden, nicht erfassten Stückgütern (2) abgetrennt und in eine jeweilige definierte relative Zielposition (P) und Zielausrichtung gegenüber den nachfolgenden Stückgütern (2) gebracht wird, wobei das wenigstens eine Stückgut (2) bei einer Verbringung zur rechten Seite der geradlinigen Bewegungsbahn (TB) der nachfolgenden Stückgüter (2) mittels einer Rechtsdrehung bewegt wird, und wobei das wenigstens eine Stückgut (2) bei einer Verbringung zur linken Seite der geradlinigen Bewegungsbahn (TB) der nachfolgenden Stückgüter (2) mittels einer Linksdrehung bewegt wird.

3. Verfahren nach Anspruch 1 oder 2, bei dem zum Bilden der palettierfähigen Lage oder der Vorgruppierung für eine palettierfähige Lage bei wenigstens einem von mehreren zeitlich aufeinanderfolgenden Schritten zumindest näherungsweise zeitgleich wenigstens zwei Stückgüter (2) erfasst, hierauf folgend von den nachfolgenden Stückgütern (2) durch seitliche Rotation aus der geradlinigen Bewegungsbahn (TB) der nachfolgenden Stückgüter (2) räumlich abgetrennt und gemeinsam in ihre jeweilige definierte relative Zielposition (P) und Zielausrichtung gegenüber den nachfolgenden Stückgütern (2) gebracht werden und/oder bei dem zum Bilden der palettierfähigen Lage oder der Vorgruppierung für eine palettierfähige Lage bei wenigstens zwei zeitlich aufeinanderfolgenden Schritten eine unterschiedliche oder jeweils gleiche Anzahl an Stückgütern (2) klemmend und/oder kraft- und/oder formschlüssig erfasst, von den nachfolgenden Stückgütern (2) durch seitliche Rotation aus der geradlinigen Bewegungsbahn (TB) der nachfolgenden Stückgüter (2) jeweils räumlich abgetrennt und in eine jeweilige definierte relative Zielposition (P) und Zielausrichtung gegenüber den nachfolgenden Stückgütern (2) gebracht werden.

4. Verfahren nach Anspruch 1, bei dem die Stückgüter (2) in mindestens einer Reihe (1) ohne Abstände oder mit minimalen Abständen unmittelbar aufeinanderfolgend in Transportrichtung (TR) als geschlossene Formation (F) in den Erfassungsbereich (4) des Manipulators (5) bewegt, dort von den Klemm- und/oder Greifmitteln (22) des Manipulators (5) erfasst und unter räumlicher Abtrennung von den nachfolgenden Stückgütern (2) der geschlossenen Formation (F) in die jeweiligen definierten relativen Zielpositionen (P) und Zielausrichtungen gebracht werden oder bei dem die Stückgüter mit gleichen oder variablen Lücken voneinander in getaktetem oder zyklisch getaktetem Zulauf in Transportrichtung (TR) in den Erfassungsbereich (4) des Manipulators (5) bewegt und dort von den Klemm- und/oder Greifmitteln (22) des Manipulators (5) erfasst und unter räumlicher Abtrennung von den jeweils nachfolgenden Stückgütern (2) in die jeweiligen definierten relativen Zielpositionen (P) und Zielausrichtungen gebracht werden.

5. Verfahren nach Anspruch 4, bei dem in den wenigstens zwei zeitlich aufeinanderfolgenden Schritten jeweils ein zuvorderst in der geschlossenen Formation (F) oder in der Reihe (1) transportiertes Stückgut (2) oder mehrere zuvorderst in der geschlossenen Formation (F) oder in der Reihe (1) transportierte Stückgüter (2) erfasst werden.

6. Verfahren nach einem der Ansprüche 1 bis 5, bei dem das jeweils vom Manipulator (5) erfasste Stückgut (2) unmittelbar vor oder bei Einleitung seiner Rotation um die vertikale Achse des Manipulators (5) durch Distanzierung in Transportrichtung (TR) und durch zumindest kurzzeitige Beschleunigung mit einer Bewegungskomponente parallel zu einer geradlinigen Bewegungsbahn der transportierten Stückgüter (2) bzw. der geschlossenen Formation (F) von nachfolgenden Stückgütern (2) räumlich abgetrennt und in Richtung einer jeweils definierten relativen Zielposition (P) und Zielausrichtung gegenüber den nachfolgenden Stückgütern (2) gebracht wird, wobei die Manipulationsschritte zur Erfassung und Positionierung der Stückgüter (2) über einen bestimmten und vorzugsweise als Deltakinematik-Roboter (42) ausgebildeten Manipulator (5) oder einen Teil eines Deltakinematik-Roboters (42) bildenden Manipulator (5) umgesetzt werden.

7. Verfahren nach Anspruch 6, bei welchem die jeweilige Anzahl an Stückgütern (2) in den Manipulationsschritten bzw. in den wenigstens zwei zeitlich aufeinanderfolgenden Schritten jeweils durch mindestens zwei sich gegenüberliegende Klemm- und/oder Greifmittel des bestimmten Manipulators (5) klemmend und/oder kraft- und/oder formschlüssig erfasst und nach Bringen in ihre jeweilige definierte Zielposition (P) mittels der mindestens zwei sich gegenüberliegenden Klemm- und/oder Greifmittel freigegeben werden.

8. Verfahren nach einem der Ansprüche 1 bis 7, bei dem jeweils nicht erfasste Stückgüter (2) von verbleibenden in einer Reihe (1) bewegten Stückgütern (2) während der klemmenden und/oder kraft- und/oder formschlüssigen Erfassung, der räumlichen Abtrennung und/oder der Überführung des wenigstens einen Stückgutes (2) in eine definierte relative Zielposition (P) und Zielausrichtung unterbrechungsfrei und/oder mit unveränderter Transportgeschwindigkeit (v3) weitertransportiert werden und/oder bei dem das wenigstens eine Stückgut (2) bei und/oder unmittelbar nach Erreichen seiner Zielposition (P) und Zielausrichtung ohne Unterbrechung und/oder Geschwindigkeits- und/oder Richtungsänderung weitertransportiert wird und/oder bei welchem dem wenigstens einem erfassten Stückgut (2) gegenüber einer Transportgeschwindigkeit (v3) der geschlossenen Formation (F) und/oder der übrigen transportierten Stückgüter (2) überlagerte weitere Geschwindigkeits- und/oder Richtungs- und/oder Drehbewegungskomponenten aufgeprägt werden.

9. Verfahren nach einem der Ansprüche 1 bis 8, bei dem die Drehbewegungen des wenigstens einen Manipulators (5) bei wenigstens zwei aufeinanderfolgenden Schritten zum jeweiligen Verbringen von Stückgütern (2) von der geschlossenen Formation (F) bzw. der in Reihe (1) bewegten Stückgüter (2) in die jeweils vorgesehenen Zielpositionen (P) und Zielausrichtungen mit jeweils gleichsinnigem Drehsinn erfolgen, insbesondere unter Weiterdrehung des Manipulators (5) über einen Drehwinkel von 270° hinaus.

10. Verfahren nach einem der Ansprüche 1 bis 9, bei dem der Manipulator (5) bzw. dessen Klemm- und/oder Greifmittel (22) nach einer Rotation um eine vertikale Achse von etwa 270°, nach Erreichung einer jeweiligen Zielposition (P) und Zielausrichtung sowie nach Freigabe des dort positionierten mindestens einen Stückgutes (2) ohne Rückdrehung und mit einer weiteren Rotation der mindestens zwei Klemm- und/oder Greifmittel (22) um etwa 90° wenigstens ein weiteres zu positionierendes und/oder neu auszurichtendes Stückgut (2) von der Reihe (1) bzw. der geschlossenen Formation (F) erfasst bzw. erfassen und mit einer erneuten Rotation um die vertikale Achse um etwa 270° in eine weitere Zielposition (P) und Zielausrichtung innerhalb des Erfassungsbereiches (4) verbringt bzw. verbringen.

11. Verfahren nach einem der Ansprüche 1 bis 10, bei dem die Drehbewegungen jeweils um eine vorzugsweise in etwa vertikale Achse erfolgen, welche sich zwischen dem jeweiligen wenigstens einen erfassten Stückgut (2) und der jeweiligen definierten Zielposition (P) befindet.

12. Verfahren nach Anspruch 11, bei dem wenigstens ein zuvorderst transportiertes Stückgut (2) aus der geschlossenen Formation (F) bzw. aus der Reihe (1) erfasst und um einen Winkel von zumindest näherungsweise 270° um die Achse gedreht wird, welche Achse sich zwischen dem jeweiligen wenigstens einen erfassten Stückgut (2) und der jeweiligen definierten Zielposition (P) befindet, insbesondere bei dem die Achse der Drehbewegung im Verlauf der Drehbewegung zumindest zeit- und/oder abschnittsweise in Richtung der jeweiligen definierten Zielposition (P) bewegt wird und/oder bei dem die Achse im Verlauf der Drehbewegung zumindest zeitweise in Richtung der jeweiligen definierten Zielposition (P) mit einer Geschwindigkeit bewegt wird, die größer ist als eine Transportgeschwindigkeit (v3) der geschlossenen Formation (F) bzw. der Reihe (1) mit Stückgütern (2) und/oder bei dem die Achse im Verlauf der Drehbewegung zumindest zeitweise in einer bestimmten Position verweilt.

13. Verfahren nach Anspruch 12, bei dem
- die Achse im Verlauf der Drehbewegung zumindest zeitweise in Richtung der jeweiligen definierten Zielposition (P) mit einer Geschwindigkeit bewegt wird, die größer ist als die Transportgeschwindigkeit (v3) der geschlossenen Formation (F) bzw. der in Reihe (1) bewegten Stückgüter (2), und
- bei dem zeitlich anschließend die Achse im Verlauf der Drehbewegung zumindest zeitweise in einer bestimmten Position verweilt.

14. Vorrichtung (10) zum Umgang mit hintereinander bewegten Stückgütern (2) mit mindestens einem Manipulator (5) mit Klemm- und/oder Greifmitteln (22) zur Handhabung von Stückgütern (2), mit wenigstens einer Transporteinrichtung (3), über welche aufeinanderfolgende Stückgüter (2) in einen Erfassungsbereich (4) des mindestens einen Manipulators (5) transportierbar sind, und mit eine Steuerungseinrichtung, welche mit dem mindestens einen Manipulator (5) in Verbindung steht und über welche der mindestens eine Manipulator (5) zum Manipulieren des mindestens einen Stückgutes gemäß dem Verfahren gemäß einem der Ansprüche 1 bis 13 angesteuert wird, sind
- wobei der mindestens eine Manipulator (5) zum klemmenden und/oder kraft- und/oder formschlüssigen Erfassen bzw. Entgegennehmen sowie zum Abtrennen und Überführen in eine Zielposition (P) und Zielausrichtung eines Stückgutes (2) oder einer Gruppe umfassend mindestens zwei Stückgüter (2) aus den mittels der wenigstens einen Transporteinrichtung (3) in seinen Erfassungsbereich (4) transportierten Stückgütern (2) ausgebildet ist,
- wobei eine, durch das von den Klemm- und/oder Greifmitteln des wenigstens einen Manipulators (5) erfasste Stückgut (2) oder die erfasste Gruppe definierte erste vertikale und in etwa senkrecht zu einer Transportrichtung (TR) der Stückgüter (2) orientierte Symmetrieebene beabstandet ist von einer hierzu in etwa parallel ausgerichteten zweiten vertikalen Symmetrieebene, die durch den Manipulator (5) bzw. durch dessen Klemm- und/oder Greifmittel (22) definiert ist,
- wobei der mindestens eine Manipulator (5) das eine transportierte Stückgut (2) oder die Gruppe zum Überführen in die definierte relative Zielposition (P) und Zielausrichtung mit einer Drehbewegung um einen Winkel von zumindest näherungsweise 270° beaufschlagen kann,
- und wobei der mindestens eine Manipulator (5) für die Drehbewegung eine vorzugsweise in etwa vertikale Achse bereitstellt und zur gegenüber der Achse versetzten klemmenden und/oder kraft- und/oder formschlüssigen Entgegennahme des einen Stückgutes (2) oder der Gruppe ausgebildet ist.

15. Vorrichtung (10) nach Anspruch 14, bei welcher der mindestens eine Manipulator (5) als Parallelkinematik- Roboter (42) ausgebildet oder Teil eines solchen ist und/oder wobei die Vorrichtung (10) wenigstens eine vorzugsweise unterbrechungsfrei angetriebene Horizontalfördereinrichtung (6) umfasst, auf welcher das mindestens eine Stückgut (2) in die Zielposition (P) und Zielausrichtung gelangt, insbesondere wobei die wenigstens eine, vorzugsweise unterbrechungsfrei angetriebene Horizontalfördereinrichtung (6) unmittelbar an die Transporteinrichtung (3) anschließt, und bei welcher die Geschwindigkeit (v6) der wenigstens einen, vorzugsweise unterbrechungsfrei angetriebenen Horizontalfördereinrichtung (6) und die Transportgeschwindigkeit (v3) der Transporteinrichtung (3) näherungsweise übereinstimmen oder exakt übereinstimmen.

16. Vorrichtung (10) nach einem der Ansprüche 14 oder 15, umfassend eine Steuerungseinrichtung, über welche der mindestens eine Manipulator (5) zum klemmenden und/oder kraft- und/oder formschlüssigen Erfassen des mindestens einen Stückgutes (2), zum räumlichen Abtrennen des mindesten seinen Stückgutes (2) von der geschlossenen Formation (F) bzw. der Reihe (1) von transportierten Stückgütern (2) sowie zum Verbringen des mindestens einen Stückgutes (2) in die definierte Zielposition (P) und Zielausrichtung ansteuerbar ist, wobei die Steuerungseinrichtung Informationen zu einer aus einer Vielzahl an Stückgütern (2) zu bildenden Vorgruppierung oder Gruppierung für eine palettierfähige Lage (12) oder Teillage aufweist bzw. abgespeichert hat, und wobei die jeweiligen Zielpositionen (P) und Zielausrichtungen der Stückgüter (2) einen Teil der Informationen bilden und dem jeweiligen mindestens einen Stückgut (2) eine bestimmte Lage (12) und/oder relative Orientierung in der jeweiligen Gruppierung zuordnen.

## Claims

1. A method used to handle piece goods (2) being moved one after another, with the piece goods (2) being transported to a seizing range (4) of at least one manipulator (5), wherein
- a transported piece good (2) or a group comprising at least two transported piece goods (2) is seized in the seizing range (4) by means of clamping means and/or gripping means (22) of the at least one manipulator (5), is spatially separated from subsequent piece goods (2), and is brought into a defined relative target position (P) and target alignment in relation to the in each instance subsequent piece goods (2) by means of a rotational movement of the manipulator (5), **characterised in that**
- a first vertical symmetry plane, which is defined by the seized piece good (2) or the seized group, and which is oriented approximately perpendicular to a transport direction (TR) of the piece goods (2), is spaced apart from a second vertical symmetry plane aligned approximately parallel thereto, with the second vertical symmetry plane being defined by the manipulator (5) or by the manipulator clamping means and/or gripping means (22), as applicable; and **in that**
- one transported piece good (2) or one group is in each instance seized in at least one step of a plurality of temporally consecutive steps and is in each instance spatially separated from a straight movement path in the original transport direction (TR) by means of a rotation of the manipulator (5) or of the manipulator clamping means and/or gripping means (22), as applicable, by a rotation angle of approximately 270° about a vertical axis and is brought into a particular defined relative target position (P) and target alignment in relation to subsequent piece goods (2),
- with the result that a palletizable layer or a pre-group for a palletizable layer is formed from the piece goods (2) that have been brought and rotated in temporally consecutive steps into their particular target position (P) and target alignment.

2. The method according to claim 1, in which, for the purpose of forming the palletizable layer or the pre-group for a palletizable layer, the in each instance at least one piece good (2) seized by the at least one manipulator (5) is in each instance spatially separated by lateral rotation from subsequent, non-seized piece goods (2) and is brought into a particular defined relative target position (P) and target alignment in relation to the subsequent piece goods (2), wherein the at least one piece good (2) is moved by means of a right-hand rotation in the instance of being brought to the right side of the straight movement path (TB) of the subsequent piece goods (2); and wherein the at least one piece good (2) is moved by means of a left-hand rotation in the instance of being brought to the left side of the straight movement path (TB) of the subsequent piece goods (2).

3. The method according to claim 1 or 2, in which, for the purpose of forming the palletizable layer or the pre-group for a palletizable layer, at least two piece goods (2) are seized at least approximately simultaneously in at least one of a plurality of temporally consecutive steps, are, following hereafter, spatially separated from the subsequent piece goods (2) by lateral rotation out of the straight movement path (TB) of the subsequent piece goods (2), and are together brought into their particular defined relative target position (P) and target alignment in relation to the subsequent piece goods (2); and/or in which, for the purpose of forming the palletizable layer or the pre-group for a palletizable layer, a different number or in each instance the same number of piece goods (2) are seized in at least two temporally consecutive steps in a clamping and/or force-locking and/or form-locking manner, are in each instance spatially separated from the subsequent piece goods (2) by lateral rotation out of the straight movement path (TB) of the subsequent piece goods (2), and are brought into a particular defined relative target position (P) and target alignment in relation to the subsequent piece goods (2).

4. The method according to claim 1, in which the piece goods (2) are moved in at least one row (1) without spaces or with minimal spaces immediately successively in transport direction (TR) as closed formation (F) into the seizing range (4) of the manipulator (5), are seized there by the clamping means and/or gripping means (22) of the manipulator (5), and are brought into the particular defined relative target positions (P) and target alignments under spatial separation from the subsequent piece goods (2) of the closed formation (F); or in which the piece goods are moved with equal or variable spaces from one another in clocked or cyclically clocked infeed in transport direction (TR) into the seizing range (4) of the manipulator (5) and are seized there by the clamping means and/or gripping means (22) of the manipulator (5) and are brought into the particular defined relative target positions (P) and target alignments under spatial separation from the in each instance subsequent piece goods (2).

5. The method according to claim 4, in which in the at least two temporally consecutive steps in each instance one piece good (2) being transported foremost in the closed formation (F) or in the row (1), or a plurality of piece goods (2) being transported foremost in the closed formation (F) or in the row (1), is or are seized.

6. The method according to one of the claims 1 to 5, in which the piece good (2) seized in each instance by the manipulator (5) is spatially separated from subsequent piece goods (2) immediately prior to or upon initiation of its rotation about the vertical axis of the manipulator (5) by being distanced in transport direction (TR) and by being at least briefly accelerated with a movement component parallel to a straight movement path of the transported piece goods (2) or of the closed formation (F), as applicable, and is brought toward an in each instance defined relative target position (P) and target alignment in relation to the subsequent piece goods (2), wherein the manipulation steps for the seizing and positioning of the piece goods (2) are carried out by way of a specific manipulator (5) preferably designed as delta kinematic robot (42) or by way of a part of a delta kinematic robot (42) forming a manipulator (5).

7. The method according to claim 6, in which the particular number of piece goods (2) are in each instance seized in the manipulation steps or, as applicable, in the at least two temporally consecutive steps in a clamping and/or force-locking and/or form-locking manner by at least two of the specific manipulator (5) clamping means and/or gripping means located opposite each other, and the piece goods (2) are released after having been brought into their particular defined target position (P) by means of the at least two clamping means and/or gripping means located opposite each other.

8. The method according to one of the claims 1 to 7, in which in each instance non-seized piece goods (2) of remaining piece goods (2) being moved in a row (1) are transported further interruption-free and/or at unchanged transport speed (v3) during the seizing in a clamping and/or force-locking and/or form-locking manner, during the spatial separation, and/or during the transfer of the at least one piece good (2) into a defined relative target position (P) and/or target alignment; and/or in which the at least one piece good (2) is transported further without interruption and/or without speed change and/or direction change upon and/or immediately after reaching its target position (P) and/or target alignment, and/or in which overlapping further velocity components and/or direction components and/or rotation components in relation to a transport speed (v3) of the closed formation (F) and/or of the other transported piece goods (2) are imparted to the at least one seized piece good (2).

9. The method according to one of the claims 1 to 8, in which the rotary movements of the at least one manipulator (5) can be carried out, in at least two consecutive steps for the particular bringing of piece goods (2) from the closed formation (F) or of piece goods (2) being moved in row (1), as applicable, into the in each instance intended target positions (P) and target alignments, in each instance with the same sense of rotation, in particular, under further rotation of the manipulator (5) beyond a rotation angle of 270°.

10. The method according to one of the claims 1 to 9, in which the manipulator (5) or the manipulator clamping means and/or gripping means (22), as applicable, after a rotation by approximately 270° about a vertical axis, after reaching a particular target position (P) and target alignment as well as after releasing the at least one piece good (2) that is positioned there, seizes or, as applicable, seize, without return rotation and with a further rotation of the at least two clamping means and/or gripping means by at least 90°, at least one further piece good (2) to be positioned and/or to be realigned from the row (1) or from the closed formation (F), as applicable, and brings or, as applicable, bring the piece good (2) with another rotation by approximately 270° about the vertical axis into a further target position (P) and target alignment within the seizing range (4).

11. The method according to one of the claims 1 to 10, in which the rotary movements are in each instance carried out about a preferably approximately vertical axis, which is located between the particular at least one seized piece good (2) and the particular defined target position (P).

12. The method according to claim 11, in which at least one piece good (2) being transported foremost is seized from the closed formation (F) or from the row (1), as applicable, and is rotated by an angle of at least approximately 270° about the axis, which axis is located between the particular at least one seized piece good (2) and the particular defined target position (P), in particular, in which the axis of the rotary movement is moved toward the particular defined target position (P) at least intermittently and/or in sections in the course of the rotary movement, and/or in which the axis is moved toward the particular defined target position (P) at least intermittently in the course of the rotary movement at a speed that is greater than a transport speed (v3) of the closed formation (F) or, as applicable, of the row (1) of piece goods (2), and/or in which the axis remains in a specific position at least intermittently in the course of the rotary movement.

13. The method according to claim 12, in which
- the axis can be moved toward the particular defined target position (P) at least intermittently in the course of the rotary movement at a speed that is greater than the transport speed (v3) of the closed formation (F) or of the piece goods (2) being moved in row (1), as applicable, and
- in which the axis temporally subsequently remains in a specific position at least intermittently in the course of the rotary movement.

14. An apparatus (10) used to handle piece goods (2) being moved one after another, with at least one manipulator (5) with clamping means and/or gripping means (22) for handling piece goods (2), with at least one transport device (3) by way of which successive piece goods (2) are transportable into a seizing range (4) of the at least one manipulator (5), and with a control device in communication with the at least one manipulator (5), by way of which control device the at least one manipulator (5) is controlled to manipulate the at least one piece good according to a method of the claims 1 to 13,
- wherein the at least one manipulator (5) is designed for the seizing or, as applicable, receiving in a clamping and/or force-locking and/or form-locking manner of a piece good (2) or of a group comprising at least two piece goods (2), as well as for the separating and transferring of said piece good (2) or of said group comprising at least two piece goods (2) from the piece goods (2) transported into the manipulator seizing range (4) by means of the at least one transport device (3) into a target position (P) and/or target alignment;
- wherein a first vertical symmetry plane, which is defined by the piece good (2) or group seized by the clamping means and/or gripping means of the at least one manipulator (5), and which is oriented approximately perpendicular to a transport direction (TR) of the piece goods (2), is spaced apart from a second vertical symmetry plane aligned approximately parallel thereto, with the second vertical symmetry plane being defined by the manipulator (5) or by the manipulator clamping means and/or gripping means (22), as applicable;
- wherein the at least one manipulator (5) can impart a rotary movement by an angle of at least approximately 270° to the one piece good (2) or group being transported in order to transfer it into the defined relative target position (P) and target alignment;
- and wherein the at least one manipulator (5) supplies a preferably approximately vertical axis for the rotary movement and is designed for the receiving of the at least one piece good (2) or the group offset in relation to the axis in a clamping and/or force-locking and/or form-locking manner.

15. The apparatus (10) according to claim 14, in which the at least one manipulator (5) is designed as parallel kinematic robot (42) or as a part thereof, and/or wherein the apparatus (10) comprises at least one horizontal conveying device (6) that is driven preferably interruption-free, on which the at least one piece good (2) reaches the target position (P) and/or target alignment, in particular, wherein the at least one horizontal conveying device (6) that is driven preferably interruption-free follows immediately after the transport device (3), and in which the speed (v6) of the at least one horizontal conveying device (6) that is driven preferably interruption-free and the transport speed (v3) of the transport device (3) correspond approximately or correspond exactly to each other.

16. The apparatus (10) according to one of the claims 14 or 15, comprising a control device by way of which the at least one manipulator (5) is controllable to seize the at least one piece good (2) in a clamping and/or force-locking and/or form-locking manner; to spatially separate the at least one piece good (2) from the closed formation (F) or, as applicable, from the row (1) of transported piece goods (2); as well as to bring the at least one piece good (2) into the defined target position (P) and target alignment, wherein the control device has information or has information stored, as applicable, on a pre-group or group for a palletizable layer (12) or partial layer to be formed from a multitude of piece goods (2), and wherein the particular target positions (P) and target alignments of the piece goods (2) form a part of the information and assign a specific layer (12) and/or a relative alignment in the particular group to the particular at least one piece good (2).

## Revendications

1. Procédé de manipulation de produits de détail (2) déplacés les uns derrière les autres qui sont transportés vers une zone de saisie (4) d'au moins un manipulateur (5), dans lequel,
- dans la zone de saisie (4), un produit de détail (2) transporté ou un groupe comprenant au moins deux produits de détail (2) transportés est saisi par le biais de moyens de serrage et/ou de préhension (22) dudit au moins un manipulateur (5), est séparé spatialement de produits de détail (2) suivants et est amené au moyen d'un mouvement de rotation du manipulateur (5) dans une position cible (P) et une orientation cible relatives définies par rapport aux produits de détail (2) respectivement suivants, **caractérisé par le fait qu'**
- un premier plan de symétrie vertical qui est défini par ledit un produit de détail (2) saisi ou le groupe saisi et qui est orienté à peu près perpendiculairement à une direction de transport (TR) des produits de détail (2) est espacé d'un deuxième plan de symétrie vertical qui est orienté à peu près parallèlement à celui-ci et qui est défini par le manipulateur (5) ou bien par les moyens de serrage et/ou de préhension (22) de ce dernier, et
- que, dans au moins une étape de plusieurs étapes se suivant dans le temps, respectivement un produit de détail (2) transporté ou un groupe est saisi et est séparé respectivement spatialement d'une trajectoire rectiligne de mouvement dans la direction de transport d'origine (TR) en faisant tourner le manipulateur (5) ou bien les moyens de serrage et/ou de préhension (22) de celui-ci autour d'un axe vertical avec un angle de rotation de 270° à peu près, et est amené dans une position cible (P) et une orientation cible relatives définies respectives par rapport à des produits de détail (2) suivants,
- d'où résulte qu'une couche palettisable ou un pré-groupement pour une couche palettisable est formé(e) à partir des produits de détail (2) amenés et tournés dans leur position cible (P) et leur orientation cible respectives dans des étapes se suivant dans le temps.

2. Procédé selon la revendication 1, dans lequel, pour former la couche palettisable ou le pré-groupement pour une couche palettisable, ledit respectivement au moins un produit de détail (2) saisi par ledit au moins un manipulateur (5) est séparé respectivement spatialement, par une rotation latérale, de produits de détail (2) suivants non saisis et est amené dans une position cible (P) et une orientation cible relatives définies respectives par rapport aux produits de détail (2) suivants, dans lequel ledit au moins un produit de détail (2), lorsqu'il est déplacé vers le côté droit de la trajectoire rectiligne de mouvement (TB) des produits de détail (2) suivants, est déplacé au moyen d'une rotation à droite, et dans lequel ledit au moins un produit de détail (2), lorsqu'il est déplacé vers le côté gauche de la trajectoire rectiligne de mouvement (TB) des produits de détail (2) suivants, est déplacé au moyen d'une rotation à gauche.

3. Procédé selon la revendication 1 ou 2, dans lequel, pour former la couche palettisable ou le pré-groupement pour une couche palettisable, dans au moins une étape d'une pluralité d'étapes se suivant dans le temps, au moins deux produits de détail (2) sont saisis au moins approximativement en même temps, puis sont séparés spatialement des produits de détail (2) suivants par une rotation latérale à partir de la trajectoire rectiligne de mouvement (TB) des produits de détail (2) suivants et sont amenés ensemble dans leur position cible (P) et orientation cible relatives définies respectives par rapport aux produits de détail (2) suivants, et/ou dans lequel, pour former la couche palettisable ou le pré-groupement pour une couche palettisable, dans au moins deux étapes se suivant dans le temps, un nombre différent ou respectivement égal de produits de détail (2) est saisi par serrage et/ou par adhérence et/ou à engagement positif, est séparé respectivement spatialement des produits de détail (2) suivants par une rotation latérale à partir de la trajectoire rectiligne de mouvement (TB) des produits de détail (2) suivants et est amené dans une position cible (P) et orientation cible relatives définies respectives par rapport aux produits de détail (2) suivants.

4. Procédé selon la revendication 1, dans lequel les produits de détail (2) sont déplacés en au moins une rangée (1) dans la direction de transport (TR), en se suivant directement sans intervalles ou à intervalles minimaux, en tant que formation fermée (F) dans la zone de saisie (4) du manipulateur (5), où ils sont saisis par les moyens de serrage et/ou de préhension (22) du manipulateur (5) et sont amenés dans les positions cibles (P) et les orientations cibles relatives définies respectives, en étant séparés spatialement des produits de détail (2) suivants de la formation fermée (F), ou dans lequel les produits de détail sont déplacés dans la direction de transport (TR) dans la zone de saisie (4) du manipulateur (5) en étant amenés de manière cadencée ou cycliquement cadencée et en ayant des intervalles identiques ou variables les uns des autres, et y sont saisis par les moyens de serrage et/ou de préhension (22) du manipulateur (5) et sont amenés dans les positions cibles (P) et les orientations cibles relatives définies respectives, en étant séparés spatialement des produits de détail (2) respectivement suivants.

5. Procédé selon la revendication 4, dans lequel respectivement un produit de détail (2) transporté en premier dans la formation fermée (F) ou dans la rangée (1) ou plusieurs produits de détail (2) transportés en premier dans la formation fermée (F) ou dans la rangée (1) est/sont saisi(s) dans lesdites au moins deux étapes se suivant dans le temps.

6. Procédé selon l'une quelconque des revendications 1 à 5, dans lequel le produit de détail (2) respectivement saisi par le manipulateur (5) est séparé spatialement de produits de détail (2) suivants, immédiatement avant ou lors de l'initiation de sa rotation autour de l'axe vertical du manipulateur (5), en étant espacé dans la direction de transport (TR) et en étant accéléré au moins pour une courte durée avec une composante de mouvement parallèle à une trajectoire rectiligne de mouvement des produits de détail (2) transportés ou bien de la formation fermée (F), et est amené en direction d'une position cible (P) et d'une orientation cible relatives respectivement définies par rapport aux produits de détail (2) suivants, dans lequel les étapes de manipulation destinées à saisir et à positionner les produits de détail (2) sont mises en oeuvre par le biais d'un manipulateur (5) spécifique réalisé de préférence en tant que robot delta cinématique (42), ou d'un manipulateur (5) faisant partie d'un robot delta cinématique (42).

7. Procédé selon la revendication 6, dans lequel, dans les étapes de manipulation ou bien dans lesdites au moins deux étapes se suivant dans le temps, le nombre respectif de produits de détail (2) sont saisis par serrage et/ou par adhérence et/ou à engagement positif respectivement par au moins deux moyens de serrage et/ou de préhension opposés dudit manipulateur (5) spécifique et sont libérés après qu'ils ont été amenés dans leur position cible définie (P) respective au moyen desdits au moins deux moyens de serrage et/ou de préhension opposés.

8. Procédé selon l'une quelconque des revendications 1 à 7, dans lequel des produits de détail (2) respectivement non saisis de produits de détail (2) restants déplacés en une rangée (1) sont transportés sans interruptions et/ou à une vitesse de transport (v3) inchangée pendant que ledit au moins un produit de détail (2) est saisi par serrage et/ou par adhérence et/ou à engagement positif, est séparé spatialement et est transféré dans une position cible (P) et une orientation cible relatives définies, et/ou dans lequel ledit au moins un produit de détail (2) est transporté sans interruption et/ou changement de vitesse et/ou de direction lorsqu'il atteint sa positon cible (P) et son orientation cible et/ou immédiatement après avoir atteint celles-ci, et/ou dans lequel d'autres composantes de vitesse et/ou de direction et/ou de mouvement de rotation superposées par rapport à une vitesse de transport (v3) de la formation fermée (F) et/ou des produits de détail (2) transportés restants sont imposées audit au moins un produit de détail (2) saisi.

9. Procédé selon l'une quelconque des revendications 1 à 8, dans lequel les mouvements de rotation dudit au moins un manipulateur (5), dans au moins deux étapes successives, pour amener respectivement des produits de détail (2) de la formation fermée (F) ou bien des produits de détail (2) déplacés en une rangée (1) dans les positions cibles (P) et orientations cibles respectivement prévues, se font avec un sens de rotation respectivement de même sens, en particulier en continuant à tourner le manipulateur (5) au-delà d'un angle de rotation de 270°.

10. Procédé selon l'une quelconque des revendications 1 à 9, dans lequel, après une rotation autour d'un axe vertical de 270° à peu près, après avoir atteint une position cible (P) et une orientation cible respectives ainsi qu'après avoir libéré ledit au moins un produit de détail (2) y positionné, le manipulateur (5) ou bien ses moyens de serrage et/ou de préhension (22) saisit ou bien saisissent au moins un autre produit de détail (2) à positionner et/ou à réaligner de la rangée (1) ou bien de la formation fermée (F) sans une rotation de retour et avec une autre rotation desdits au moins deux moyens de serrage et/ou de préhension (22) de 90° à peu près, et amène ou bien amènent celui-ci dans une autre position cible (P) et orientation cible à l'intérieur de la zone de saisie (4), avec une nouvelle rotation d'environ 270° autour de l'axe vertical.

11. Procédé selon l'une quelconque des revendications 1 à 10, dans lequel les mouvements de rotation se font chacun autour d'un axe de préférence à peu près vertical qui est situé entre ledit au moins un produit de détail (2) saisi respectif et la position cible (P) définie respective.

12. Procédé selon la revendication 11, dans lequel au moins un produit de détail (2) transporté en premier de la formation fermée (F) ou bien de la rangée (1) est saisi et est tourné d'un angle d'au moins approximativement 270° autour de l'axe, lequel axe est situé entre ledit au moins un produit de détail (2) saisi respectif et la position cible (P) définie respective, en particulier dans lequel l'axe du mouvement de rotation est déplacé au cours du mouvement de rotation, au moins temporairement et/ou par sections, en direction de la position cible (P) définie respective, et/ou dans lequel l'axe est déplacé au cours du mouvement de rotation, au moins temporairement, en direction de la position cible (P) définie respective à une vitesse qui est supérieure à une vitesse de transport (v3) de la formation fermée (F) ou bien de la rangée (1) comprenant des produits de détail (2), et/ou dans lequel l'axe reste au moins temporairement, au cours du mouvement de rotation, dans une position déterminée.

13. Procédé selon la revendication 12, dans lequel
- l'axe est déplacé au cours du mouvement de rotation, au moins temporairement, en direction de la position cible (P) définie respective à une vitesse qui est supérieure à la vitesse de transport (v3) de la formation fermée (F) ou bien des produits de détail (2) déplacés en une rangée (1), et
- dans lequel, ensuite, l'axe reste au moins temporairement, au cours du mouvement de rotation, dans une position déterminée.

14. Dispositif (10) de manipulation de produits de détail (2) déplacés les uns derrière les autres, comprenant au moins un manipulateur (5) ayant des moyens de serrage et/ou de préhension (22) pour la manipulation de produits de détail (2), au moins un dispositif de transport (3) par l'intermédiaire duquel des produits de détail (2) successifs peuvent être transportés dans une zone de saisie (4) dudit au moins un manipulateur (5), ainsi qu'un dispositif de commande qui est en communication avec ledit au moins un manipulateur (5) et par lequel ledit au moins un manipulateur (5) est commandé pour manipuler ledit au moins un produit de détail selon un procédé des revendications 1 à 13,
- dans lequel ledit au moins un manipulateur (5) est conçu pour saisir ou bien recevoir par serrage et/ou par adhérence et/ou à engagement positif ainsi que pour séparer et amener dans une position cible (P) et une orientation cible un produit de détail (2) ou un groupe comprenant au moins deux produits de détail (2) desdits produits de détail (2) transportés dans sa zone de saisie (4) au moyen dudit au moins un dispositif de transport (3),
- dans lequel un premier plan de symétrie vertical qui est défini par le produit de détail (2) saisi par les moyens de serrage et/ou de préhension dudit au moins un manipulateur (5) ou le groupe saisi et qui est orienté à peu près perpendiculairement à une direction de transport (TR) des produits de détail (2) est espacé d'un deuxième plan de symétrie vertical qui est orienté à peu près parallèlement à celui-ci et qui est défini par le manipulateur (5) ou bien par les moyens de serrage et/ou de préhension (22) de ce dernier, et
- dans lequel, pour amener ledit un produit de détail (2) transporté ou le groupe dans la position cible (P) et l'orientation cible relatives définies, ledit au moins un manipulateur (5) peut imposer à celui-ci un mouvement de rotation autour d'un angle d'au moins approximativement 270°,
- et dans lequel ledit au moins un manipulateur (5) fournit un axe de préférence à peu près vertical pour le mouvement de rotation et est conçu pour recevoir par serrage et/ou par adhérence et/ou à engagement positif et de manière décalée par rapport à l'axe ledit un produit de détail (2) ou ledit groupe.

15. Dispositif (10) selon la revendication 14, dans lequel ledit au moins un manipulateur (5) est conçu en tant que robot à cinématique parallèle (42) ou fait partie d'un tel robot à cinématique parallèle, et/ou dans lequel le dispositif (10) comprend au moins un dispositif de transport horizontal (6) entraîné de préférence sans interruptions sur lequel ledit au moins un produit de détail (2) atteint la position cible (P) et l'orientation cible, en particulier dans lequel ledit au moins un dispositif de transport horizontal (6) entraîné de préférence sans interruptions est directement contigu au dispositif de transport (3), et dans lequel la vitesse (v6) dudit au moins un dispositif de transport horizontal (6) entraîné de préférence sans interruptions et la vitesse de transport (v3) du dispositif de transport (3) se correspondent approximativement ou se correspondent exactement.

16. Dispositif (10) selon l'une quelconque des revendications 14 ou 15, comprenant un dispositif de commande par l'intermédiaire duquel ledit au moins un manipulateur (5) peut être commandé pour saisir par serrage et/ou par adhérence et/ou à engagement positif ledit au moins un produit de détail (2), pour séparer spatialement ledit au moins un produit de détail (2) de la formation fermée (F) ou bien de la rangée (1) de produits de détail (2) transportés et pour amener ledit au moins un produit de détail (2) dans la position cible (P) et l'orientation cible définies, dans lequel ledit dispositif de commande présente ou bien a stocké des informations relatives à un pré-groupement ou un groupement pour une couche palettisable (12) ou une couche partielle, qui est à former à partir d'une pluralité de produits de détail (2), et dans lequel les positions cibles (P) et orientations cibles respectives des produits de détail (2) constituent une partie des informations et associent audit au moins un produit de détail (2) respectif une position (12) déterminée et/ou une orientation relative dans le groupement respectif.
